(19)

Europäisches Patentamt
European Patent Office
Office européen des brevets

(11) **EP 4 369 611 A1**

(12) **EUROPEAN PATENT APPLICATION**

(43) Date of publication:
**15.05.2024 Bulletin 2024/20**

(21) Application number: **22206081.6**

(22) Date of filing: **08.11.2022**

(51) International Patent Classification (IPC):
**H04B 1/04** (2006.01)

(52) Cooperative Patent Classification (CPC):
**H04B 1/0483**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **INTEL Corporation**
**Santa Clara, CA 95054 (US)**

(72) Inventors:
- **SAHA, Sourav**
  **560087 Bangalore (IN)**
- **AGARWAL, Anshu**
  **560037 Bangalore (IN)**
- **MITTY, Harish**
  **560097 Bangalore (IN)**
- **THAKUR, Jayprakash**
  **560035 Bangalore (IN)**
- **DEV, Rishav**
  **562125 Bangalore (IN)**
- **GOWDA, Chandrashekar**
  **560076 Bangalore (IN)**
- **HEGDE, Mythili**
  **560078 Bangalore (IN)**
- **JAGADISH, Arun**
  **560052 Bangalore (IN)**

- **KAMATH, Manjunath**
  **81671 Munich (DE)**
- **MANOHAR, Naveen**
  **560010 Bangalore (IN)**
- **CHINTAMANI, Sarat**
  **560077 Bangalore (IN)**
- **PETIT, Barath C.**
  **560077 Bangalore (IN)**
- **CHAKRABORTY, Suranjan**
  **560035 Bangalore (IN)**
- **PADEKAR, Ruchi Sitaram**
  **413736 Ahmednagar (IN)**
- **TAMRAKAR, Maruti**
  **490022 Durg (IN)**
- **KODANKANDATH, Anoob Anto**
  **Santa Clara, 95054 (US)**
- **CHANDEL, Amit Singh**
  **560103 Bangalore (IN)**
- **PRABHA, Abhijith**
  **686667 Piravom (IN)**
- **GUPTA, Jay Vishnu**
  **Bengaluru (IN)**

(74) Representative: **Viering, Jentschura & Partner mbB**
**Patent- und Rechtsanwälte**
**Am Brauhaus 8**
**01099 Dresden (DE)**

(54) **DESIGN METHOD TO CONTROL 5G WIFI COEXISTENCE INTERFERENCE TO IMPROVE DATA RATE**

(57)    A mobile communication device is provided, comprising: a first radio configured to process a first signal in a first frequency band, and a second radio configured to process a second signal in a second frequency band, wherein the first frequency band and the second frequency band are overlapping at least in part; and an antenna-plexer circuit, coupled to the first radio and the second radio, and comprising at least one shared antenna to send the first signal and the second signal, and the antenna-plexer circuit further comprising a combining circuit coupling the first radio and the second radio with the shared antenna, wherein the combining circuit comprises at least one bulk acoustic wave filter configured as a band rejection filter having an attenuation slope having an amount of at least about 0.15 dB/MHz at the cut-off frequency.

FIG.1A

EP 4 369 611 A1

## Description

## Technical Field

The present disclosure relates to communications between multiple communication devices having multiple radios.

## Background

With the current hybrid working model, more and more people are working from home where connection is not robust and often a need arise to switch to other connectivity sources. Wireless network connectivity instability often results in bad user experience and the need for an end-user to manually switch to an alternate (wireless) network. Mobile hotspots are usual alternatives for wireless connectivity in case primary connection is at fault. Existing solutions for wireless connectivity aim at providing instant hotspots by manual intervention or with a need of maintaining a dedicated polling/scanning, e.g. persistent Bluetooth (BT) or WiFi peer-to-peer (P2P) connections. Instant hotspots allow a mobile communication device to switch to the hotspot of another mobile communication device on disconnection from a primary network. However, a drawback of this instant hotspot feature is that it relies on the mobile communication devices to be in constant Bluetooth (BLE) advertising and scanning state while waiting for loss of primary connectivity of the mobile communication device thereby not being power efficient. Thus, existing solutions are not power optimized and seamless.

Further, in mobile communication devices using WiFi and 5G (5th generation of 3GPP (3rd Generation Partnership Project) wireless wide area network (WWAN) communication) communications there is de-sense issue in WiFi channel throughput due to interference from 5G adjacent bands. The 2.4 GHz WiFi channel is adjacent to the n41, n40 and n7 bands of the 5G spectrum, while the n79 band of the 5G spectrum is adjacent to the 5 GHz WiFi. De-sense happens due to poor isolation between antennas at adjacent bands of both radios (5G & WiFi). Due to the proximity of cellular and WiFi channels in the 2.4 GHz spectrum and the 5 GHz spectrum, utilization of WiFi and 5G spectrums can cause interference during operation. This may pose serious interference threats due to transmit (Tx) leakage and Adjacent Channel Leakage Ratio (ACLR) in respective bands. This can greatly impact data rates. In addition, there is the potential risk of hardware damage due to high power signals reaching receive (Rx) paths. Existing recommendations and guidelines implement bulk acoustic wave (BAW) filter at WiFi front end for rejection at adjacent bands. However, current BAW filter adds insertion loss of 2-3 dB in the WiFi path. Further used is a coexistence manager that can send commands to not to operate both radios (5G & WiFi) at the same or adjacent channels.

Further, in current applications, multiple communication devices and multiple hard discs can connect for content sharing, e.g. photos, documents, within closed group irrespective of the physical location of a user. However, currently, there is no single solution for easily and remotely accessing any contents across the multiple devices using wireless communication links. That is, devices have to be physically in close vicinity to get access to the contents of the device.

## Brief Description of the Drawings

In the drawings, like reference characters generally refer to the same parts throughout the different views. The drawings are not necessarily to scale, emphasis instead generally being placed upon illustrating the principles of the invention. In the following description, various embodiments of the invention are described with reference to the following drawings, in which:

FIGS.1A to 1C show schematic diagrams of wireless communication systems;
FIG.2 shows a frequency diagram of a wireless communication system;
FIGS.3A to 3D show schematic diagrams of wireless communication systems;
FIGS.4A to 4B show schematic diagrams of wireless communication systems;
FIGS.5A to 5B show schematic diagrams of wireless communication systems; and
FIGS.6A to 6C show schematic diagrams of wireless communication systems.

## Description

The following detailed description refers to the accompanying drawings that show, by way of illustration, specific details and embodiments in which the invention may be practiced.

The word "exemplary" is used herein to mean "serving as an example, instance, or illustration". Any embodiment or design described herein as "exemplary" is not necessarily to be construed as preferred or advantageous over other embodiments or designs.

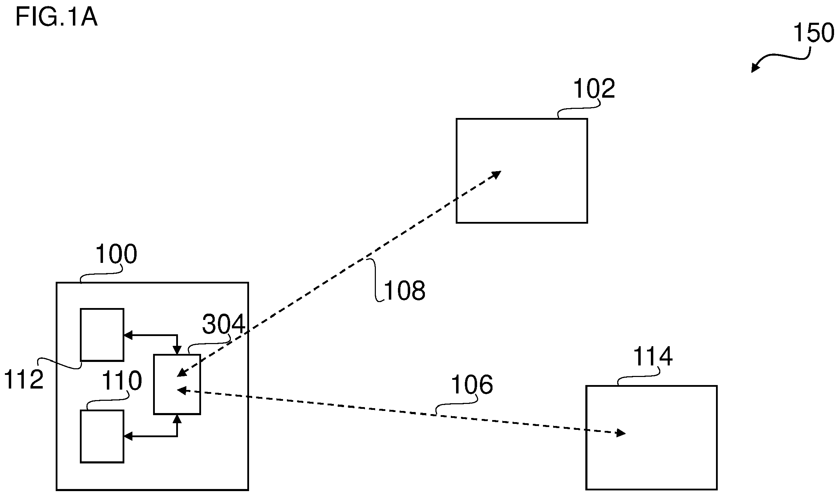

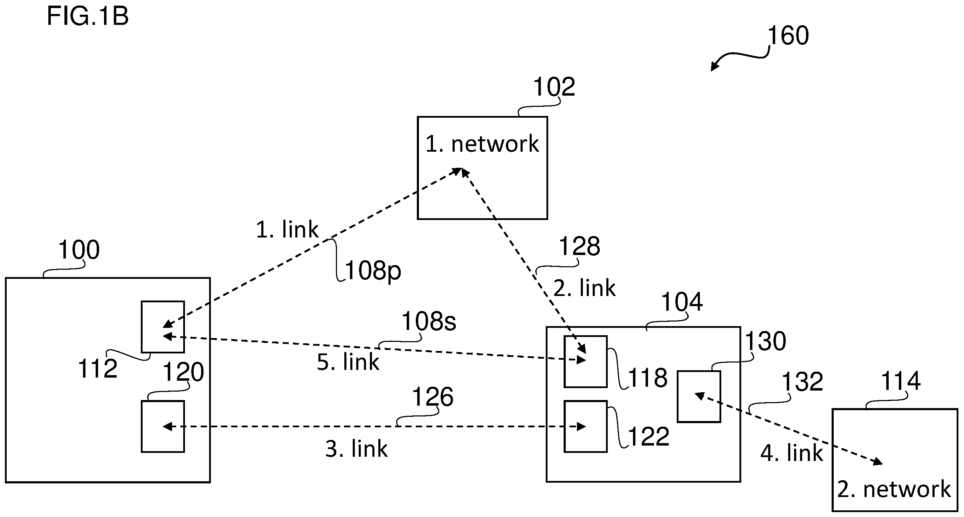

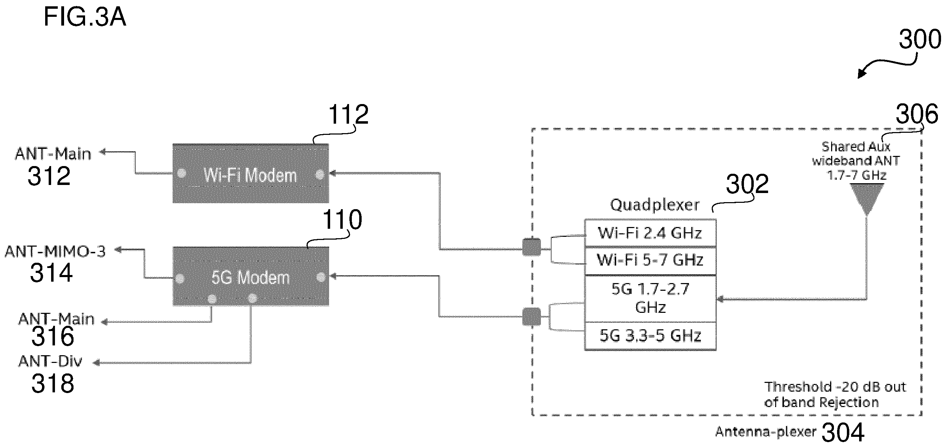

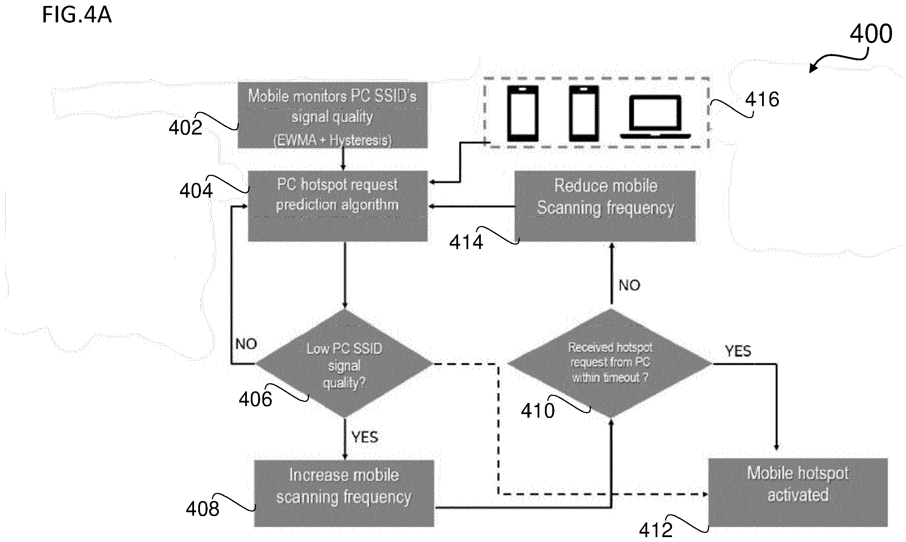

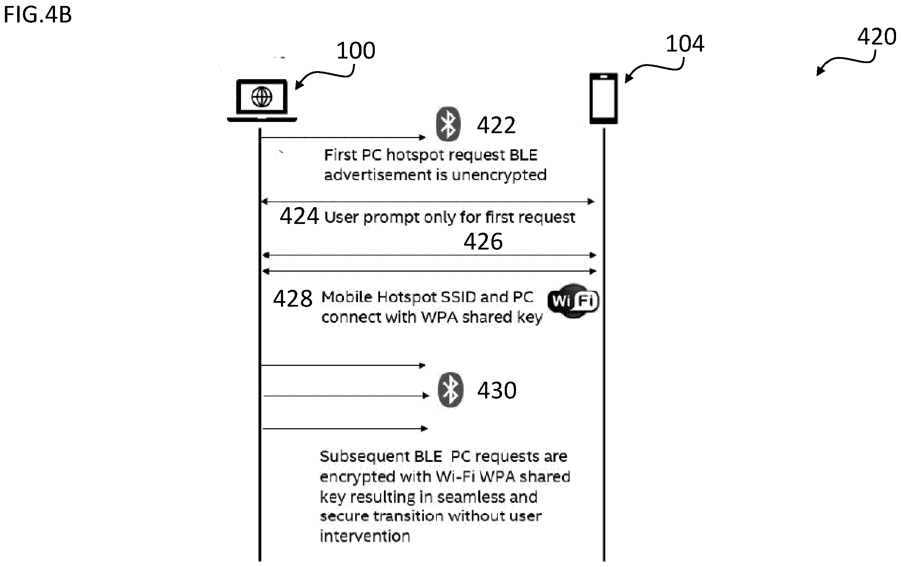

This disclosure addresses various scenarios for improving the user experience of mobile communication devices relying on different communication links between various communication devices, e.g. WiFi communication in combination with a Bluetooth communication and/or a 3GPP wireless wide area network (WWAN) communication. The various described features of the illustrated wireless communication systems described in the following may be combined to provide an even further improved communication system, e.g. a network transition (see FIG.1B, FIG.4A and FIG.4B) using an antenna-plexing circuit (FIG.1A, and FIG.3A to FIG.3C).

As an example, a shared antenna cascaded with one or more rejection filters having an injection loss of at least about -20dB for out-of-band rejection improves possible interferences of WiFi and 5G communication of a mobile communication device. The one or more shared antenna(s) may be configured to support WiFi signals, e.g. in a radio frequency signal range from about 2.4 GHz to about 2.5 GHz, and from about 5.15 GHz to about 7.125 GHz. The one or more shared antenna(s) may be configured to support 5G communication of a 3GPP WWAN - multiple input multiple output (MIMO), e.g. in a frequency signal range from about 1.7 GHz to about 2.7 GHz, and in a frequency signal range from about 3.3 GHz to about 5.0 GHz. The use of filtering from diplexer(s) and shared antenna(s) may improve coexistence performance of the 5G radio and the WiFi radio. The shared antenna can also be integrated with a radio frequency (RF) switch, e.g. as a best antenna selection feature, in the communication system. A coexistence management circuit (also denoted as Coex manager) may control the RF switch. This allows operating two radios, e.g. a 5G radio and a WiFi radio, at adjacent channels. Coexistence may offer higher throughput, which may translate directly into faster data rates. External implementation of the rejection filters may also allow flexibility in some stock keeping units (SKU) where certain bands may not be required. Thus, a product can be designed or developed for different countries, so every design can have a unique SKU.

In another example, a first wireless communication device connected to a first network of the communication system may use an alternate network provider, e.g. a mobile hotspot provided from a second wireless communication device, to transition to a second network. Note, typically it may not be power efficient for the second wireless communication device to keep its hotspot enabled un-used for a long period of time to serve the transition request from the first wireless communication device, e.g. the laptop. In the wireless communication system, the second wireless communication device may pro-actively predict the transition request from the first wireless communication device to switch from the first network to the second network by monitoring the connectivity metrics between the first wireless communication device and the connected first network. Thus, the second wireless communication device may activate the hotspot in case it is likely that the first wireless communication device intends to switch over to the hotspot. The proactive prediction by the second wireless communication device may drastically reduce the transition time for the first wireless communication device to switch to the alternate network, e.g. from the first network to the second network, while being power efficient. A cross transport security protocol may be used addressing security requirements for this network transition. Thus, the communication system may provide a seamless, secure and a low latency method for a first wireless communication device to improve the quality of the communication link using a mobile hotspot without the need for maintaining a dedicated control channel, e.g. a persistent Bluetooth or WiFi peer-to-peer (P2P) connection as in previous solutions. Hence, the communication system may provide instant hotspots without manual intervention or without a need of maintaining a dedicated polling/ scanning and may promote a seamless and secure transition with minimal impact on the user experience, latency and power.

In another example, the wireless communication system may provide a secure way to access remote wireless communication devices having an embedded SIM (eSIM) and using Class 2 SMS (short message service) 3GPP WWAN message based on the hash key concept. A software application installed and running on a first wireless communication device and a second wireless communication device has the capability to upgrade, e.g. wake, the second wireless communication device from a reduced power mode, e.g. a hibernate, flight mode, sleep or shutdown state, to an active mode. The upgrade may include an antenna switching from a single active antenna, e.g. Main Antenna, to multiple active antennas, e.g. Main Antenna, MIMO Antenna, Diversity Antenna, based on the state of the second wireless communication device. As an example, the upgrade may be a switching between the class of WWAN module from Cat M1 to Cat12. The reduced power mode of the second wireless communication device may be a reduced capability (RedCap) of a WWAN device. Further, a battery powered second wireless communication device may provide information about its battery life indication to the first wireless communication device. This may improve the user experience of the first wireless communication device and allows retrieving contents from any wireless communication device which is remotely placed from any remote locations accessible from hibernate, flight mode or shutdown state. Illustratively, the wireless communication system provides a private cloud within a group of shared wireless communication devices so that the data is secure and can be maintained in a structured manner with ease to access anytime.

**FIG.1A** illustrates a schematic illustration of a wireless communication system 150 having a first wireless communication device 100 that may have a first wireless communication link 108 between the first wireless communication device 100 and a first wireless communication network 102 (also denoted as first network or first radio network) and a second communication link 106 between the first wireless communication device 100 and a second wireless communication network 114 (also denoted as second network or second radio network). The first wireless communication device 100 may be a laptop computer or a smart phone, for example.

The first wireless communication device 100 may be communicatively coupled to the first network 104 via the first wireless communication link 108 using a first radio 112. The first wireless communication device 100 may be communicatively coupled to the second network 114 via the second communication link 106 using a second radio 110. The first radio 112 may be configured to communicate a first signal in a first frequency band, and the second radio 110 may be configured to communicate a second signal in a second frequency band. The first frequency band and the second frequency band may be overlapping at least in part.

The first radio 112 may be a WiFi radio and the second radio 110 may be a 5G radio. The first frequency band and the second frequency band may include one or more frequency bands in a range from 2.4 GHz to 7 GHz, respectively. The first frequency band may include a first sub-band including a frequency of about 2.4 GHz, and a second sub-band in a range from about 5 GHz to about 7 GHz. The second frequency band may include one or more frequency bands in a range from about 1.7 GHz to about 5 GHz. The second frequency band may include a first sub-band in a range from about 1.7 GHz to about 3.3 GHz, and a second sub-band in a range from about 3.3 GHz to about 5 GHz.

The first wireless communication device 100 may include the first radio 112 and the second radio 110 coupled to an antenna-plexer circuit 304. The antenna-plexer circuit 304 may include at least one shared antenna configured to transmit and/or receive the first signal and the second signal. The antenna-plexer circuit 304 is illustrated in more detail in FIG.3A to FIG.3D.

The antenna-plexer circuit 304 may include a combining circuit coupling the first radio 112 and the second radio 110 to the shared antenna.

The combining circuit may include at least one band rejection filter having an injection loss of at least -15 dB, e.g. at least -20 dB, for out-of-band frequencies. The band rejection filter may be configured to have an attenuation slope having an amount of 0.15 dB/MHz at the cut-off frequency, e.g. at least -15 dB per 100MHz. Out-of-band frequencies may be out of the first frequency band and the second frequency band. The band rejection filter may be configured to include an insertion loss of about 0.5 dB for the first signal and the second signal. The band rejection filter may be a bulk acoustic wave filter.

The cut-off frequency may be the point in a response of the band rejection filter where a transition band and passband meet, e.g. defined by a half-power point, e.g. a frequency for which the output of the band rejection filter is -3 dB of the nominal passband value of the band rejection filter. Alternatively, the cut-off frequency may defined as a stopband corner frequency where a transition band and a stopband meet of the band rejection filter, e.g. a frequency for which the attenuation of the band rejection filter is larger than the required stopband attenuation, e.g. at least 15 dB.

The shared antenna may be a wideband antenna configured for a frequency range from about 1.7 GHz to about 7 GHz. Alternatively, or in addition, the antenna-plexer circuit 304 may include a first shared antenna configured for a first sub-band of the first frequency band overlapping the second frequency range, and a second shared antenna configured for a second sub-band of the first frequency band overlapping the second frequency range. Each of the first radio 112 and the second radio 110 may be coupled to the first shared antenna and the second shared antenna. The first sub-band and the second sub-band may be non-overlapping. The first sub-band may include for example a frequency range from about 1.7 GHz to about 2.7 GHz. The second sub-band may include for example a frequency range from about 3.3. GHz to about 7.2 GHz.

The combining circuit may include a quadplexer, the quadplexer including an antenna port coupled to the shared antenna, a first radio port coupled to the first radio 112 and a second radio port coupled to the second radio 110.

Alternatively, or in addition, the combining circuit may include a first diplexer coupling a first shared antenna to the first radio 112 and the second radio 110, and a second diplexer coupling a second shared antenna to the first radio 112 and the second radio 110. Each of the first diplexer and the second diplexer may include a band rejection filter having an injection loss of at least -15 dB, e.g. at least -20 dB, for out-of-band frequencies. At least one of the band rejection filters of the first diplexer and the second diplexer may be configured to include an insertion loss of about 0.5 dB for the first signal and the second signal. At least one of the band rejection filters of the first diplexer and the second diplexer may be a bulk acoustic wave filter. At least one of the first diplexer may include a band pass filter and a band stop filter. The band stop filter may be configured to pass signals having frequency except a predetermined frequency band and the band pass filter may be configured to pass signals having the predetermined frequency band. The first signal in the first sub-band may include the predetermined frequency band. The first signal in the first sub-band may be substantially free of frequencies out-of-band from the predetermined frequency band.

Alternatively, or in addition, the combining circuit may further include a coexistence management circuit. The combining circuit may include a radio frequency switch coupled to each of the at least one shared antenna, the first radio 112, the second radio 110 and the coexistence management circuit. The coexistence management circuit may be configured to control the radio frequency switch depending on the frequencies of the first signal and the second signal. A first band rejection filter may couple the first radio 112 with the radio frequency switch, and a second band rejection filter may couple the second radio 110 with the radio frequency switch.

The radio frequency switch may be configured to: couple the first radio 112 to the at least one shared antenna; couple the second radio 110 to the at least one shared antenna; couple each of the first radio 112 and the second radio 110 to the at least one shared antenna; and couple none of the first radio 112 and the second radio 110 to the at least one shared antenna.

**FIG.1B** illustrates a schematic illustration of a wireless communication system 160 having a first wireless communication device 100, a second wireless communication device 104, a first network 102, and a second network 114. The first wireless communication device 100 and the second wireless communication device 104 may be coupled to first network 102, e.g. the same network service set identifier (SSID). The first wireless communication device 100 may be a laptop computer or personal computer. The second wireless communication device 104 may be a smartphone, a tablet computer, a phone, or a laptop computer. The first network 102 may be a broadcast network, e.g. a WiFi network. The second network 114 may be a WiFi network or a cellular WWAN, e.g. a 3GPP WWAN. The wireless communication system 160 illustrated in FIG.1B may be combined with the wireless communication system 150 in FIG.1A.

The first wireless communication device 100 may include a first radio 112 and a second radio 120. The first radio 112 of the first wireless communication device 100 may be a W-Fi radio 112 establishing a WiFi communication link 108p (also denoted as first communication link) between the first wireless communication device 100 and the first network 102 (which in this example is a WiFi network).

The second radio 120 of the first wireless communication device 100 may be any kind of radio, e.g. a Bluetooth radio, a WiFi radio, or a 3GPP WWAN radio. The second radio 120 of the first wireless communication device 100 may establish a third wireless communication link 126 between the first wireless communication device 100 and the second wireless communication device 104. The second wireless communication device 104 may have a second radio 122 corresponding to the second radio 120 of the first communication device 100.

The second wireless communication device 104 may in addition include a first radio 118 and (optionally) a third radio 130.

The first radio 118 of the second wireless communication device 104 may be a WiFi radio 118 establishing a second communication link 128, e.g. a WiFi communication link 128, between the second wireless communication device 104 and the first network 102 (which in this example is a WiFi network). The second wireless communication device 104 may receive a quality value of the first communication link 108p via the second communication link 128. Illustratively, the first wireless communication device 100 may be communicatively coupled to the first network 104 via the first wireless communication link 108p using its first radio 112. The second wireless communication device 100 may be communicatively coupled to the first network 104 via the second communication link 128 using its first radio 118. In case the quality of the first wireless communication link 108p falls below a predetermined threshold value, e.g. determined by a desired minimum RSSI value, the first wireless communication device 100 may form a fifth communication link 108s with the second wireless communication device 104 using the respective first radios 112, 118 of the wireless communication devices 100, 104. The second wireless communication device 104 may pass on the communication of the first wireless communication device 100 to the first network 102 or to the second network 114 using the third radio 130.

The third radio 130 of the second wireless communication device 104 may be a 3GPP radio establishing a fourth communication link 132, e.g. a 3GPP WWAN communication link 132, between the second wireless communication device 104 and the second network 114 (which in this example is a 3GPP WWAN, e.g. a 4G, 5G or 6G network). However, the third radio may also be a WiFi radio for connecting to another WiFi having a SSID different from the first network.

In other words, the second wireless communication device 104 may form a hotspot for the first wireless communication device 100. The second wireless communication device 104 may pass on the communication of the first communication device 100 to the first network 102 using the second communication link 128. Alternatively, or in addition, the second wireless communication device 104 may pass on the communication of the communication of the first communication device 100 to the second network 114 using the fourth communication link 132.

As an example, the second wireless communication device 104 may determine a first received signal strength indication (RSSI) value for the second communication link 128 and a second RSSI value for the fourth communication link 132, compare the first RSSI value with the second RSSI value, and pass on the communication from the first wireless communication device 100 using the communication link of the second communication link 128 and the fourth communication link 132 having the higher RSSI value. Thus, the communication connection of the first wireless communication device 100 can be improved.

In addition, the second wireless communication device 104 may (optionally) deny to establish the fifth communication link 108s, e.g. by not enabling the hotspot, in case the first RSSI value and the second RSSI value are worse than the RSSI value of the first communication link 108p.

In other words, in the wireless communication system 160 the first wireless communication device 100 may be configured to establish a first wireless communication link 108p to the first network 102, and to establish a fifth wireless communication link 108s to the second wireless communication device 104. The second wireless communication device 104 may be configured to determine a quality of the first wireless communication link 108p, and to establish the fifth wireless communication link 108s when the determined quality of the first wireless communication link 108p falls below a predetermined threshold value. The quality of the first wireless communication link 108p may be determined using the RSSI value of the first wireless communication link 108p. The first network 102 may provide the RSSI value of the first wireless communication link 108p to the second communication device 104.

The second wireless communication device 104 may be configured to determine the quality of the first wireless communication link 108p at a predetermined frequency. In case the quality of the first wireless communication link 108p falls below the predetermined threshold value, the second wireless communication device may increase the frequency for determining the quality of the first wireless communication link 108p from a first frequency value to a second frequency value. In case the first wireless communication device 100 does not establish the fifth wireless communication link 108s within a predetermined time period after the quality of the first wireless communication link 108p fell below the predetermined threshold value, the second wireless communication device 104 may decrease the frequency for determining the quality of the first wireless communication link 108p from the second frequency value to the first frequency value. Alternatively, or in addition, e.g. optionally, in case the quality of the first wireless communication link 108p falls below the predetermined threshold value, the second wireless communication device 104 may enable its hotspot feature or establish the fifth wireless communication link 108s.

In addition, the wireless communication system 160 may include at least one third communication device (not shown) communicatively coupled to the first network 102 and the second wireless communication device 104, e.g. via the first network 102. The third communication device may provide the RSSI value of its communication link with the first network to the second wireless communication device 104, e.g. using a user datagram protocol (UDP) socket. The second wireless communication device 104 may use the RSSI values of the communication link of the third communication device with the first network as indication for the performance of the first network and may use this as an indication to predict if the first wireless communication device 100 is going to switch the network connection, e.g. is going to use the second wireless communication device 104 as hotspot. Thus, the second wireless communication device 104 may enable the hotspot, e.g. a short time period before the first wireless communication device 100 even requests the hotspot, or proactively may establish the fifth communication link 108s.

An encryption key for the fifth communication link 108s may be agreed to between the first wireless communication device 100 and the second wireless communication device 104 using a third communication link 126, e.g. a Bluetooth message or a 3GPP message between the first wireless communication device 100 and the second wireless communication device 104 the before the fifth communication link 108s is established for the first time. Alternatively, the encryption key for the fifth communication link 108s may be agreed to between the first wireless communication device 100 and the second wireless communication device 104 via the first network 102. In this case, the second radios 120, 122 and the third communication link 126 may not be used in this feature.

Thus, the communication device 160 may provide a smooth and seamless transition from the first communication link 108p to the fifth communication link 108s in case the quality of the first communication link 108p indicates a bad WiFi connection. This way, a user experience and wireless communication capability of the first communication can be improved.

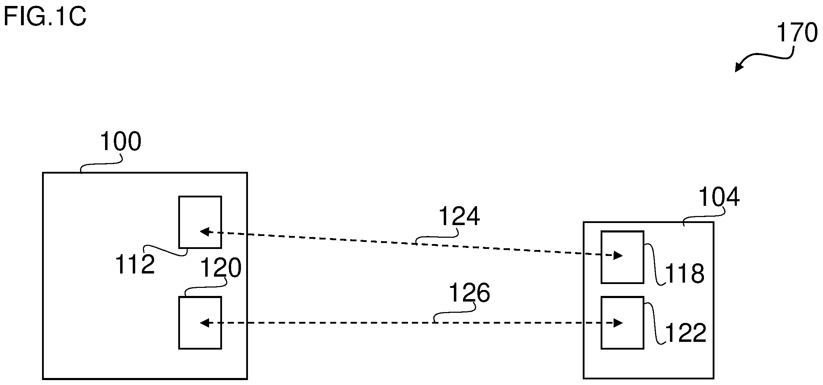

**FIG.1C** illustrates a schematic illustration of a communication system 170 having a first wireless communication device 100 and a second wireless communication device 104. The wireless communication system 170 illustrated in FIG.1C may be combined with the wireless communication system 150 illustrated in FIG.1A and/or the wireless communication system 160 in FIG.1B, or any combination thereof.

The first wireless communication device 100 may include a first radio 112 and a second radio 120, and the second wireless communication device 104 may include a first radio 118 and a second radio 122. The first wireless communication device 100 may be communicatively coupled to the second wireless communication device 104 via a first communication link 124 between the first wireless communication device 100 and the second wireless communication device 104 using their first radios 112, 118. Further, the first wireless communication device 100 may be communicatively coupled to the second wireless communication device 104 via a second communication link 126 between the first wireless communication device 100 and the second wireless communication device 104 using their second radios 120, 122.

The first wireless communication device 100 may have a processor configured to: generate a hash key; send the hash key using a class 2 message in a cellular WWAN to the second wireless communication device 104, e.g. via the first communication link 126; receive an acknowledge message from the second wireless communication device 104; and, after having received the acknowledge message, provide an access to the second communication device 104 for the first wireless communication device 100, e.g. generate a virtual memory of the second communication device 104 on the first wireless communication device 100, e.g. via a second communication link 124. The cellular WWAN may be a 3GPP WWAN for example. The 3GPP WWAN may be one of a 3G, 4G, 5G, and 6G communication network.

A class 2 message in a 3GPP WWAN message may include data about the subscriber identity module (SIM) card or embedded SIM (eSIM). The SIM data may be successfully transferred prior to sending acknowledgment.

The hash key may be a unique hash key at least in part of the cellular WWAN. The hash key may be based on a personal user information. The personal user information may include at least one of a password, gesture, face print, and fingerprint. The unique hash key may be generated in a software application. The class 2 message may be a class 2 short message service (SMS) message. The class 2 short message may be submitted through a wireless communication network. The software application of the first wireless communication device 100 may generate a virtual memory in the software application using a physical memory of the second communication device 104.

The second wireless communication device 104 may have a processor configured to: receive, in a reduced power mode, a class 2 message in a cellular WWAN from the first wireless communication device 100, the class 2 message including a hash key and the reduced power mode including a first number of active antennas; verify the hash key; activate, after having verified the hash key, an active mode of the second wireless communication device 104, the active mode including a second number of active antennas, wherein the second number is larger than the first number; send an acknowledge (ACK) message to the first communication device 100; and establish the first communication link 124 between the first wireless communication device 100 and the second wireless communication device 104 for a memory of the second wireless communication device 104 on the first wireless communication device 100 using a physical memory of the second communication device 104. However, the second wireless communication device 104 may also provide access to the first wireless communication device 100 in case the second wireless communication device 104 is in the active mode when receiving the class 2 message.

The second wireless communication device 104 may log in the software application after the second wireless communication device 104 sends the acknowledge message. The access to the second communication device 104, e.g. the virtual memory, may be generated in the software application of the first wireless communication device 100.

The processor of the second wireless communication device 104 may be at least one of an embedded controller and a board management controller. The processor may be a microcontroller. The processor may be configured for at least one of the functions of the communication device of power sequencing, reset sequencing, thermal management, debug interfacing, and firmware loading. Antennas of the first number of active antennas may include one or more main antenna of the communication device. In case the communication device may be located in a home location, data may be routed between the communication device and the terminal communication device using a WiFi link. The second wireless communication device 100 may include a screen, and, in the active mode, the screen may be switched off in the reduced power mode. The screen may be switched off in the active mode.

Thus, in the communication system 170, data can be easily shared between the first wireless communication device 100 and the second wireless communication device 104 using the first communication link 126, e.g. to activate the second wireless communication device 104 from a reduced power mode, and the second communication link 124 for transferring the data between the physical memory of the second communication device 104 and a physical memory of the first communication device 100, e.g. using the virtual memory on the first communication device 100.

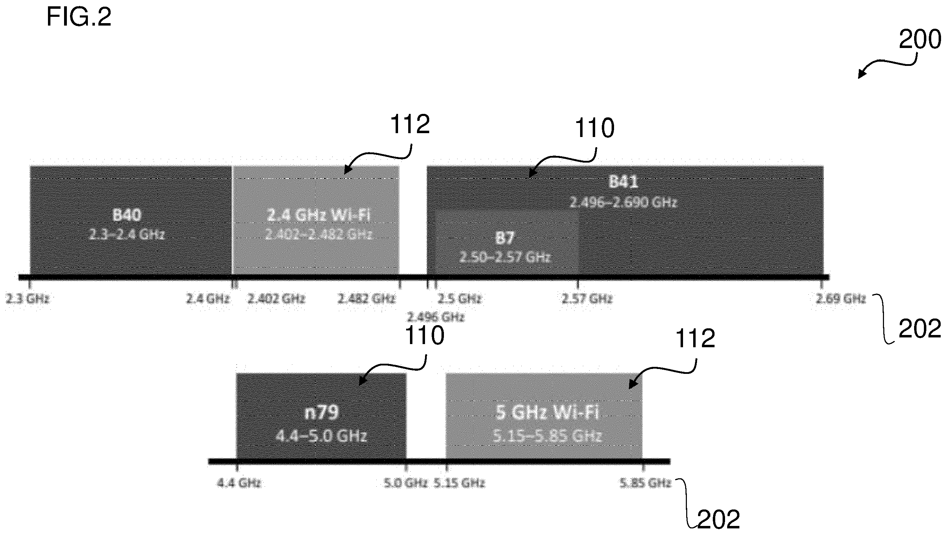

**FIG.2** shows a frequency diagram 200 of a wireless communication system having a WiFi communication link 106 and a 5G communication link 108 - e.g. corresponding to the communication system illustrated in FIG.1A - showing the band overlap of the first radio 112 and the second radio 110 depending on the frequency 202 of the signal.

In previous solutions, if 5G and WiFi were operating at adjacent frequencies, a coexistence manager (Coex manager) based on a lookup table would give the priority either to the 5G communication link or the WiFi communication link and switch either of them to a different frequency band. For instance, if the 5G radio and the WiFi radio would operate at 2.4GHz band and the 5G communication link must be given the priority, then in that case the WiFi communication link would be switched to a 5GHz channel.

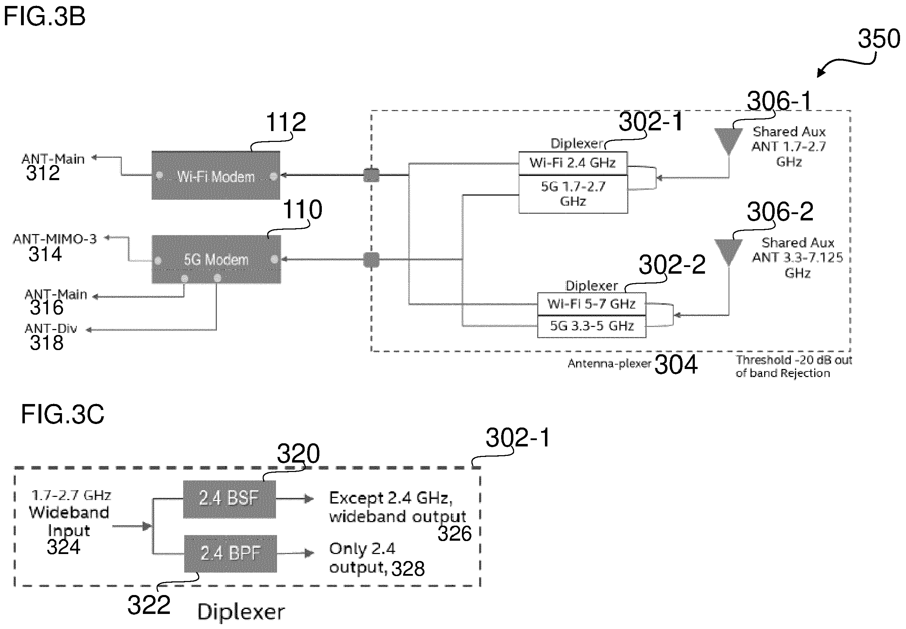

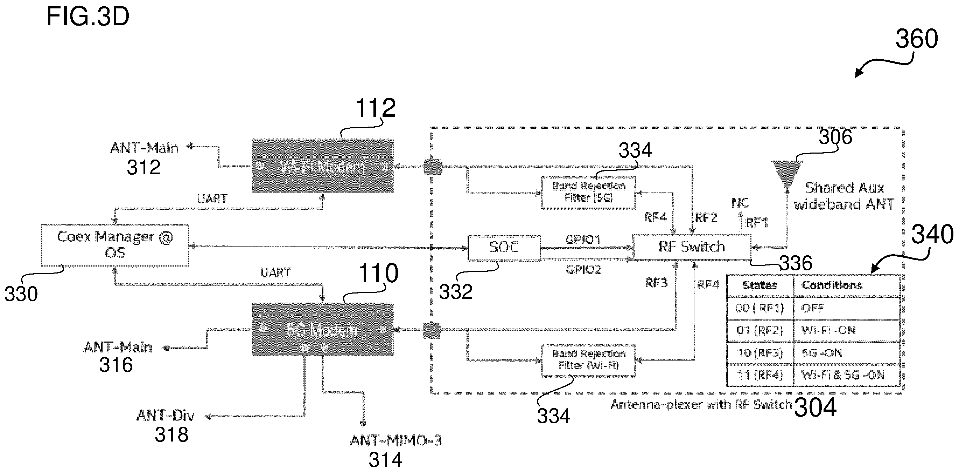

In the wireless communication systems illustrated in **FIG.3A** to **FIG.3D,** a 5G communication link and a WiFi communication link can coexist without switching the operating frequency even if the communication links are operating at very adjacent frequencies. Thus, allowing the 5G radio and the WiFi radio of the first wireless communication device to operate at the same time at adjacent frequencies. Hence, the communication systems 300, 350, 360 illustrated in FIG.3A, FIG.3B and FIG.3D achieve 5G-WiFi coexistence. Note that a radio may also be denoted as a modem in FIG.3A to FIG.3D.

In the communication system 300 illustrated in **FIG.3A,** the WiFi radio 112 and the 5G radio 110 use a shared wideband antenna 306 and a quadplexer as a combining circuit 302 in an antenna-plexer circuit 304 (see also FIG.1A).

The 5G-MIMO antenna 314 and WiFi aux antenna 310 may be combined to be the shared wideband antenna 306. Additionally, the 5G radio 110 may have further antennas 316, 318 that are not shared with the antenna of the WiFi. The shared wideband antenna 306 may be configured to support frequencies in a range from 1.7 GHz to about 7 GHz. The quadplexer 302 may be configured to have an insertion loss of about 0.5 dB for the operating frequency band and an insertion loss -20 dB for out-of-band frequencies. As an example, the quadplexer 302 may include a bulk acoustic wave filter as a band rejection filter. The band rejection filter may be configured to have an attenuation slope having an amount of at least 15 dB/100MHz, e.g. -0.15 dB/MHz, e.g. at least -15 dB for out-of-band frequencies.

In the communication system 350 illustrated in **FIG.3B,** the WiFi radio 112 and the 5G radio 110 use a first shared antenna 306-1 coupled to a first diplexer 302-1 and a second shared antenna 306-2 coupled to a first diplexer 302-2. The combining circuit may include the first diplexer 302-1 and the second diplexer 302-2. The structure of an exemplary diplexer 302-1 is shown in **FIG.3C** having a band stop filter (BSF) 320 for passing every frequency 326 except 2.4 GHz, and a band pass filter 322 for only passing a frequency 328 of 2.4 GHz. Thus, an input signal 324 may be split into a first signal 326 and a second signal 328 non-overlapping the first signal 326.

The diplexer 302-1, 302-2 may be used with a shared wideband antenna. Alternatively, or in addition, the first shared antenna 306-1 coupled to the first diplexer 302-1 and the second shared antenna 306-2 coupled to the second diplexer 302-2 may be used. The first shared antenna 306-1 may be configured to support a radio frequency band width of 1.7GHz to 2.7 GHz. The second shared antenna 306-2 may be configured to support a radio frequency band width of 3.3 GHz to 7.125 GHz. The band stop filter (BSF) 320 shown in FIG.3C can be used to implement the first diplexer 302-1. The diplexer 302-1, 302-2 may be configured to have an insertion loss of about 0.5 dB for the operating frequency band and an insertion loss (also denoted as rejection) of at least about -20 dB for out-of-band frequencies.

In the communication system 360 illustrated in **FIG.3D,** the WiFi radio 112 and the 5G radio 110 are coupled to a coexistence management circuit 330 (also denoted as coexistence manager 330) coupled to a radio frequency (RF) switch 336 coupled to a shared wideband antenna 306. Alternatively, or in addition, a first shared antenna and a second shared antenna may be used, e.g. see FIG.3B. Band rejection filters 334 may have an out-of-band frequency rejection of at least -15 dB, e.g. at least - 20 dB, and may be coupled between the RF switch 336 and the respective radio 110, 112.

The operating frequencies of received RF signals may be send to the coexistence management circuit 330 in the operating system through the Universal Asynchronous Receiver Transmitter (UART) interface. The coexistence manager 330 may control the RF switch 336 via a system on a chip (SOC) 332 providing general purpose input outputs (GPIO) to realize various switch states illustrated in the table 340. Thus, 5G communication links and WiFi communication links can coexist without switching the operating frequency of the 5G radio or the WiFi radio if they are operating at very adjacent frequencies. The coexistence management circuit 330 can send commands on antenna selection/switching to get better connectivity based on antenna placement/isolation in the communication system 360.

As an example, by default, RF signals received by the shared wideband antenna 306 may be sent to the 5G radio 110 and the WiFi radio 112 without any band rejection filter, e.g. the state of the RF switch 336 may be "11" (also denoted as RF4 in the table 340).

If the 5G radio 110 and the WiFi radio 112 operate at adjacent frequencies, then the coexistence management circuit 330 may drive high on the GPIO1 port and the GPIO2 port. The RF switch 336 may change the path to band rejection filters 334. The rejection filters 334 may have -20dB out of band rejection, respectively. With this, for example, the WiFi radio 112 receives RF signals only in the WiFi frequency bands and rejects all RF signals in the 5G frequency bands, and vice versa. Thus, the 5G radio 110 and the WiFi radio 112 can operate at the same time at adjacent frequencies.

In case of only the WiFi radio 112 operates, the RF switch state may be "01" (also denoted as RF2 in the table 340). Similarly, in case only the 5G radio 110 operates, the RF switch state may be "10" (also denoted as RF3 in the table 340). Further, the RF switch 336 may also be configured for no radio 110, 112 to operate by selecting state of the RF switch 336 as "00" (also denoted as RF1 in the table 340). For example, in this case, the RF switch 336 may switch to a stub.

Further to the communication system illustrated in FIG.1B, intermittent primary connectivity in WiFi communication links or WWAN communication links may lead to a less than ideal user experience. This issue may be seen in stationary and mobile scenarios. As an example, a user may be travelling and facing connectivity issues with a first network in a hotel, at a conference, or at an airport. As another example, a user may be at home but facing WiFi connectivity issues, e.g. due to network maintenance, fluctuating performance. The bandwidth and performance of a 3GPP mobile communication network, e.g. 4G, 5G or 6G, may be superior to home WiFi. Thus, the user may switch the first wireless communication device to an alternate network, e.g. a mobile hotspot, provided by the second wireless communication device to maintain connectivity of the first communication device. The first wireless communication device may achieve the network transition seamlessly with minimal latency in a secure manner without user intervention. However, it may be not be power efficient to keep the mobile hotspot of the second wireless communication device always enabled in anticipation of a connect request from the first communication device. On the other hand, a lack of immediate availability of the alternate network, e.g. the mobile hotspot of the second communication device, will induce latency for the transition from the first network to the second communication device. Thus, the communication system 400, 420 illustrated in **FIG.4A** and **FIG.4B** provides a near seamless transition for the first wireless communication device to the alternate, second wireless communication device on disconnection from the first network while being power efficient and secure for the second communication device.

The second wireless communication device may predict a connect request from the first wireless communication device to improve power efficiency, as illustrated in **FIG.4A.** The second wireless communication device monitors 402 the link quality of the first wireless communication device with the first network, e.g. the RSSI of SSID beacons of the first network, e.g. a WiFi network. Note that the monitoring may be feasible and may incur little or no overhead on the second wireless communication device considering that practically the first wireless communication device and the second wireless communication device may be expected to be connected to the same first network, e.g. the same WiFi SSID, since wireless communication devices may be used by the same user and would be co-located most of the time. Thus, a communication system can be provided having a power efficient, low latency real time network switch over capability for seamless connectivity. In other words, the communication system can provide a seamless transition without dedicated control channel. The second wireless communication device may perform a collaborative link quality connectivity prediction. The second wireless communication device may monitor the link quality of the first wireless communication device for triggering a network switch-over of the first communication device.

A core module for network switch over may run 404 on the second wireless communication device which proactively monitors the quality of the first communication link. As an example, the first wireless communication device and the second wireless communication device may be connected to the same first network, e.g. the same WiFi SSID, and may be co-located. The monitoring algorithm running on the second wireless communication device may be expected to incur minimal overhead from the perspective of the second wireless communication device while being accurate. Optionally, the first wireless communication device may provide periodically at low frequency information about the quality of its communication link with WiFi network. The second wireless communication device may further receive common multipoint Bluetooth device RSSI, e.g. a multi-point Bluetooth device paired or connected to the first wireless communication device and the second wireless communication device to determine the quality of the communication link of the first wireless communication device with the WiFi network.

Other trusted devices (also denoted as third communication devices) connected to the same first network, e.g. same WiFi SSID, can pass on 416 their perspective of the quality of the WiFi network to the second wireless communication device periodically on a best effort basis, e.g. via UDP socket. Alternatively, or in addition, the first wireless communication device may send low frequency updates on its quality of the first wireless communication link to the second communication device. Thus, the second wireless communication device may receive 416 RSSI inputs from other trusted devices, e.g. other mobile communication device or laptops, which are connected to the same first network, e.g. the same WiFi SSID. The third communication device(s) may use UDP socket to send this data periodically to the second wireless communication device on a best effort basis since the first, second, and third communication devices may be connected to the same first network. The RSSI inputs of the third communication devices may be used as indication for the current performance of the WiFi network.

In case of multiple communication devices contributing to the network switch over prediction, the second wireless communication device can adopt a voting-based decision algorithm to predict the quality of the communication link between the first communication device and the first network.

A core module for network switch over may determine 406 whether a bad WiFi connection of the first wireless communication device with the WiFi network is given, e.g. by comparing the determined RSSI values of the communication link between the first wireless communication device and the first network with a predetermined threshold value. In case it has been determined that the RSSI value is below the threshold value (406 - yes), the second wireless communication device may increase its scanning frequency 408 whether the first wireless communication device intends to switch over the network 410. Thus, the second wireless communication device may remain in the state of increased scanning rate for a predetermined time period to periodically check whether the first communication devices request a communication link with the second communication device. If no request is send to the second wireless communication device (410 - no) by the first communication device, the second communication device may reduce the scanning rate 414 and the process may start again. If the second communication device receives a hotspot request from the first communication device (410- yes), the second wireless communication device activates 412 the hotspot. Alternatively (in FIG.4A illustrated as dashed arrow), the second wireless communication device may directly activate the mobile hotspot 412 after the second communication device having determined that the RSSI value of the communication link between the first wireless communication device and the first network is below the predetermined threshold value.

An exponentially weighted moving average (EWMA) based averaging scheme may be used to maintain the link quality metric of the first communication link between the first wireless communication device and the first network from the perspective of each of the communication devices, as expressed in equation 1.

$$LQ(t, i) = \alpha_i R(t, i) + (1 - \alpha_i) LQ(t - 1, i) \qquad (1)$$

with LQ (t, i) being the averaged quality of the respective wireless communication link between the (first) WiFi network and the $i^{th}$ communication device, R(t,i) being the instantaneous link quality between the (first) WiFi network and the $i^{th}$ communication device, and $\alpha_i$ being a weighting parameter for the quality of the first communication link of the $i^{th}$ communication device with $0 \le \alpha_i \le 1$.

Typically, $\alpha_i$ may be $\ge 0.5$ if more weightage is to be given for instantaneous measurements i.e. R(t ,i) and vice-versa. So, if the $i^{th}$ communication device corresponds to a mobile communication device, then $\alpha_i$ can be $\le 0.5$ to account for mobility and smoothen the outliers. Correspondingly if the $i^{th}$ communication device is a personal computer (PC) or laptop computer, higher weightage can be given to instantaneous measurements i.e., $\alpha_i \ge 0.5$.

For the network transition, a transport authentication protocol may be used, illustrated in **FIG.4B.** The transport authentication protocol may prevent malicious agents from hijacking the network transition. Hijacking of the network switching feature by malicious agents can be prevented by authenticating the first wireless communication device and the second communication in the connect request payload.

As an example, a cross-transport security protocol, e.g. utilizing WiFi keys in the Bluetooth payload, may be used to prevent hijacking. The Bluetooth payload may exploit the second wireless communication device hotspot WiFi shared keys 422, 428 which may be generated when the first wireless communication device connects with the hotspot of the second wireless communication device for the first time. User confirmation 424 may be needed only for this step. Subsequent switch requests 430 (via Bluetooth advertisements) from the first wireless communication device may be encrypted with the WiFi WPA (WiFi protected access) shared key. The advantage of this protocol may be that a user need not create a separate account in the cloud for this feature. Thus, feature security can be guaranteed in a manner agnostic to the underlying operating system.

However, the illustrated Bluetooth communication is only exemplary and the WiFi WPA shared key for the communication link with the hotspot of the second wireless communication device and the first wireless communication device may be agreed on between the first wireless communication device and the second wireless communication device using any one of a Bluetooth connection, the WiFi connection with the (first) WiFi network, and a cellular WWAN message.

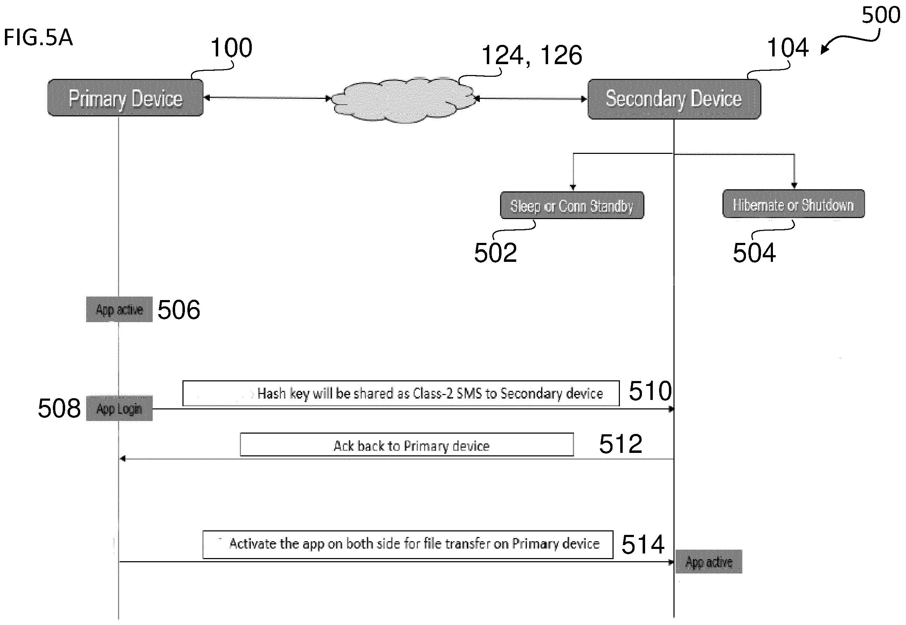

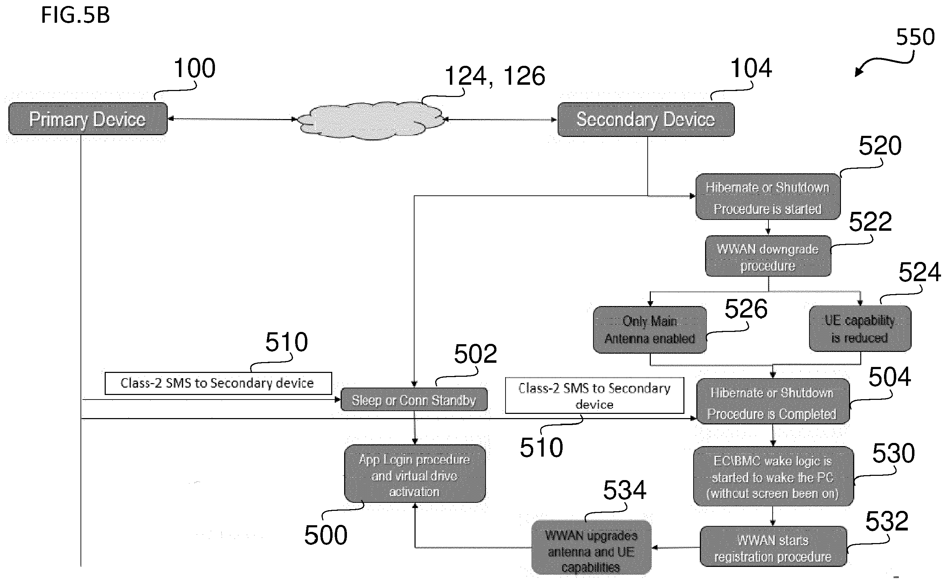

Further to the communication system illustrated in FIG.1C, the second communication device, e.g. as described before, may be in a reduced power mode and may be activated for a data transfer by the first wireless communication device using a cellular WWAN message. **FIG.5A** and **FIG.5B** show schematic diagrams of a respective wireless communication system 500. In FIG.5A and FIG.5B, the first wireless communication device may be denoted as primary device and the second communication device may be denoted as secondary device. The first wireless communication device 100 may be any kind of mobile or stationary communication device, e.g. a mobile phone or personal computer (PC). The second wireless communication device 104 can be any kind of mobile or stationary communication device, for example the personal PC of the user or any PC from a trusted person. The second wireless communication device 104 may be connected to a first network, e.g. a wireless wide area network (WWAN), and to a second network, e.g. a WiFi network, and a connectivity module for exchanging files may be installed on the first wireless communication device and the second communication device. The second wireless communication device 104 may be connected with one or more physical memory(s) to store and/or retrieve data files to be exchanged.

The second wireless communication device 104 can be configured to be in any one of a sleep mode 502, a connected standby mode 502, a shutdown mode, a flight mode and a hibernate state 504, or an active mode. A 3GPP SMS Class 2 communication 510, 512 may be used between the communication devices 100, 104 to upgrade the second wireless communication device from the reduced power mode in to an active mode, e.g. to wake from sleep, wake from hibernate, wake from flight mode, or wake from shutdown.

The first wireless communication device 100 may access the secondary device using a software application installed and running 506, 508 on the first wireless communication device 100 and installed and (optionally) running 514 on the second wireless communication device 104 in a secured way.

Any kind of files, documents, photos as needed can be exchanged between the first wireless communication device and the second wireless communication device using the software application. Thus, as an example, program execution issues by exceeding the memory of the first wireless communication device 100 become obsolete since data files can be pushed on the second wireless communication device 104.

The software application may be extended to connect a second wireless communication device 104 from a plurality of communication devices for instant sharing of files and/or documents. Similarly, the first wireless communication device 100 may be accessible on the second wireless communication device 104, e.g. via a reverse authentication as described below. This may allow to copy the contents back and forth between the communication devices 100, 104, e.g. for synchronization of files, data, and folders, or for mirroring partitions of the memory of the communication devices.

In detail, when the software application 506 is active on the first wireless communication device 100, the first communication device generates a hash key, e.g. based on a password, face print or finger print. The hash key may be unique in the 3GPP WWAN. After the first wireless communication device 100 logged in 508 in the software application, e.g. with the intention to transfer files, the hash key will be shared 510 as a Class 2 SMS in 3GPP WWAN with the second wireless communication device 104.

The second wireless communication device 104, e.g. a SIM tool kit of the second wireless communication device 104, may process the received class 2 SMS and pass it on to a processor. The processor may be an embedded controller (EC) or a board management controller (BMC), e.g. formed as a microcontroller. The processor may be configured to handle power sequencing, reset sequencing, thermal management, debug interface, firmware loading, etc. Once the hash key has been matched, e.g. accepted, the second wireless communication device sends an acknowledge message 512 to the first wireless communication device 100.

Note that before going to hibernate, sleep, or flight mode state 504, the processor of the second communication device may reduce the user equipment (UE) capability 524, e.g. reduce the number of active antennas, e.g. to Main Antenna only 526, to save power, by a downgrade procedure 522 after the hibernate, flight mode or shutdown procedure 520 starts, see FIG.5B. For example, a WWAN M.2 module may be downgraded to lower UE capability, e.g. CAT M1 or RedCap 525, 526, when the second wireless communication device 104 transitions to a hibernate, flight mode or shutdown state 504. Thus, the antenna configuration may be reduced 526 to monitor only the Main antenna (Main Ant) of the second wireless communication device in shutdown and hibernate, flight mode or shut down state 504 for power saving purposes.

In active mode, the second wireless communication device logs in to software application after having verified the hash key. The software application presents the login of the second wireless communication device on the first communication device, e.g. including a username and password. Thus, the software application is active 514 on the first wireless communication device and the second communication device. The software application may show the second wireless communication device on the first communication device, e.g. a virtual memory thereof.

Once the system is in a wake state 534, the WWAN M.2 Module capability will be upgraded to CATx based on the type of module used and all antennas will get active for better performance, for example. The processor of the second wireless communication device 104 may upgrade 534 the UE capability and number of active antennas, e.g. to Main Antenna, Diversity Antenna, and MIMO Antenna, once the second wireless communication device moves to active state, e.g. the wake logic is started 520 and the WWAN starts the registration process 532 resulting in the WWAN upgrades 534, as illustrated in FIG.5B. If the second wireless communication device is in a home location, then data can also be routed to WiFi instead of WWAN. This may be different from manageability perspective with regard to degrade the antenna configuration or UE capabilities before moving to the hibernate, flight mode or shutdown state 504 for paging monitoring.

The processor may first to be turned on in the second wireless communication device which may help to initiate the booting procedure 530. The processor may help to wake the system when in a shutdown, flight mode or hibernate state 504. Hence, antenna configuration and UE capabilities may be upgraded back to higher configuration only once the complete registration procedure 532 is completed and when the user really wants to move data into or out of the second wireless communication device. Then, the login procedure to the software application 500 as illustrated in FIG.5A can start. The processor of the second wireless communication device 104 may access the login procedure to the software application 500 directly from a sleep or connected standby state 502, as illustrated in FIG. 5B.

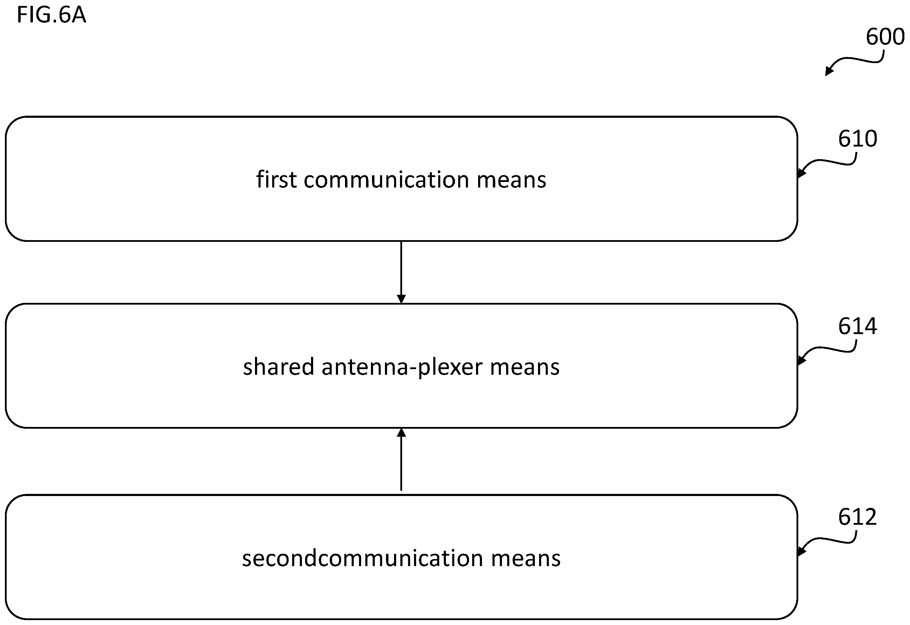

**FIG.6A** illustrates a schematic diagram of a communication system. The communication system may be performed on a communication means 600. The communication means 600 may include a means 610 for communicating a first signal in a first frequency band, and a means 612 for communicating a second signal in a second frequency band. The first frequency band and the second frequency band may be overlapping at least in part; an antenna-plexing means 614 for transmitting and receiving the first signal and the second signal using at least one shared antenna, the antenna-plexing means including the shared antenna and a combining means for coupling the means 610 for communicating the first signal and the means 612 for communicating the second signal with the shared antenna. The combining means may include a band rejection means having an injection loss of at least -15 dB, e.g. at least - 20 dB, for out-of-band frequencies.

The means 610 for communicating the first signal may be a WiFi radio and the means 612 for communicating the second signal may be a 5G radio. The first frequency band and the second frequency band may include one or more frequency bands in a range from about 2.4 GHz to about 7 GHz, respectively. The first frequency band may include a first sub-band including a frequency of about 2.4 GHz, and a second sub-band in a range from about 5 GHz to about 7 GHz. The second frequency band may include one or more frequency bands in a range from about 1.7 GHz to about 5 GHz. The second frequency band may include a first sub-band in a range from about 1.7 GHz to about 3.3 GHz, and a second sub-band in a range from about 3.3 GHz to about 5 GHz.

The band rejection means may include an insertion loss of about 0.5 dB for the first signal and the second signal. The band rejection means may include a bulk acoustic wave filter. Out-of-band frequencies may be out of the first frequency band and the second frequency band. Out-of-band frequencies may be out of at least one of the first frequency band and the second frequency band. Out-of-band frequencies may be out of the overlapping frequency band of the first frequency band and the second frequency band.

The shared antenna may be a wideband antenna for a frequency range from about 1.7 GHz to about 7 GHz. The combining means may include a quadplexing means for coupling the shared antenna to each of the means for communicating the first signal and the means for communicating the second signal.

The antenna-plexer means 614 may include a first shared antenna configured for a first sub-band of the first frequency band overlapping the second frequency range, and a second shared antenna configured for a second sub-band of the first frequency band overlapping the second frequency range. Each of the means for communicating the first signal and the means for communicating the second signal may be coupled to the first shared antenna and the second shared antenna. The first sub-band and the second sub-band may be non-overlapping. The first sub-band may include for a frequency range from about 1.7 GHz to about 2.7 GHz. The second sub-band may include for a frequency range from about 3.3. GHz to about 7.2 GHz.

The combining means may include a first duplexing means for coupling the first shared antenna to the means for communicating the first signal and the means for communicating the second signal, and a second diplexer coupling the second shared antenna to the means for communicating the first signal and the means for communicating the second signal. Each of the first diplexing means and the second diplexing means may include a band rejection means having an injection loss of at least -15 dB, e.g. at least -20 dB, for out-of-band frequencies. At least one of the band rejection means of the first diplexing means and the second diplexing means to include an insertion loss of about 0.5 dB for the first signal and the second signal. At least one of the band rejection means of the first diplexing means and the second diplexing means may be a bulk acoustic wave filter. At least one of the first diplexing means may include a band pass means and a band stop means, The band stop means pass signals having frequency except a predetermined frequency band and the band pass means pass signals having the predetermined frequency band. The first signal in the first sub-band may include the predetermined frequency band. The first signal in the first sub-band may be substantially free of frequencies out-of-band from the predetermined frequency band.

The communication means 600 may include a coexistence manager means for switching between the at least one antenna and at least one of the first radio, the second radio and a stub depending on the frequencies of the first signal and the second signal. The communication means 600 may be a laptop computer or a smart phone.

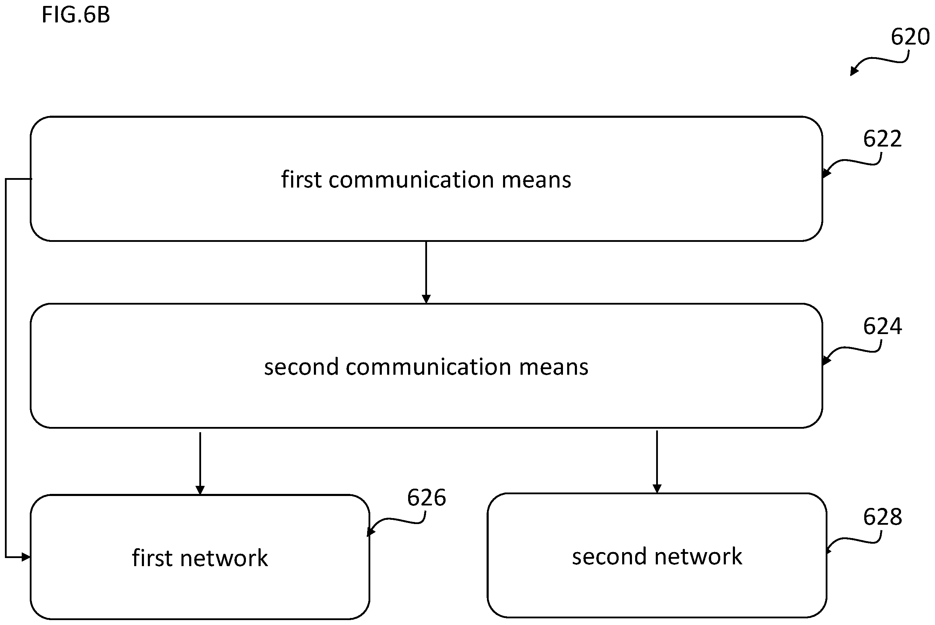

**FIG.6B** illustrates a schematic diagram of a communication system 620. The communication system 620 may include a first communication means 622 for establishing a first wireless communication connection with a first network 626, and for establishing a second wireless communication connection with a second communication means 624. The wireless communication system 620 may further include the second communication means 624 for establishing a third wireless communication connection with the first network 626 or a second network 628, and for establishing the second wireless communication connection with the first communication means 622. The second communication means 624 may determine a quality of the first wireless communication connection, and establish the second wireless communication connection when the determined quality of the first wireless communication connection falls below a predetermined threshold value.

In case of a formed second wireless communication connection, the second communication means pass on communications from the first communication means to the first network 626 or a second network 628 via the third communication connection.

The first network 626 may be a broadcast network, e.g. a WiFi network. The second network 628 may be a 3GPP WWAN.

The second wireless communication connection may be a directional communication connection. The second wireless communication connection may be one of a WiFi connection or Bluetooth connection.

The first communication means 622 may be a laptop computer or personal computer. The second communication means 624 may be a smartphone, a tablet computer, a phone, or a laptop computer.

The second communication means 624 may determine the quality of the first wireless communication connection at a predetermined frequency. In case the quality of the first wireless communication connection falls below the predetermined threshold value, the second communication means increases the frequency for determining the quality of the first wireless communication connection from a first frequency value to a second frequency value. In case the first communication means 622 does not establish second wireless communication connection within a predetermined time period after the quality of the first wireless communication connection fell below the predetermined threshold value, the second communication means 624 decreases the frequency for determining the quality of the first wireless communication connection from the second frequency value to the first frequency value. In case the quality of the first wireless communication connection falls below the predetermined threshold value, the second communication means 624 may establish the second wireless communication connection.

The quality of the first wireless communication connection may be determined using the received signal strength indication (RSSI) value of the first wireless communication connection. The first network 626 may provide the RSSI value of the first wireless communication connection to the second communication means 624.

The wireless communication system 620 may further include at least one third communication means communicatively coupled to the first network 626 and the second communication means 624. The third communication means may be communicatively coupled to the first communication means 622 and the second communication means 624 via Bluetooth connections. The third communication means may provide the RSSI value of its wireless communication connection to the second communication means 624. The third communication means may provide the quality of its wireless communication connection to the second communication means 624 using a user datagram protocol (UDP) socket.

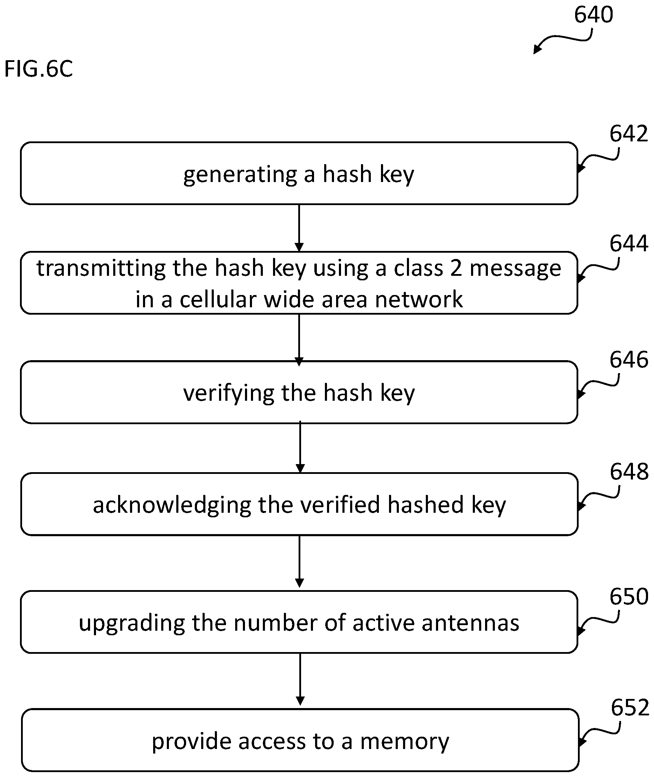

**FIG.6C** illustrates a flow diagram of a communication system. The communication system 640 may be performed on a communication means. The communication means may include a means 642 for generating a hash key in a first communication means; a means 644 for transmitting the hash key using a class 2 message in a cellular wide area network to a second communication means; a means 646 for verifying the hash key in the second communication means; a means 648 for acknowledging the verified hashed key to the first communication means; a means 650 for upgrading the number of active antennas in the second communication means; and a means 652 to provide access to a memory of the second communication means on the first communication means.

The hash key may be a unique hash key at least in part of a 3GPP WWAN. The hash key may be based on a personal user information. The 3GPP WWAN may be one of a 3G, 4G, 5G, and 6G communication network. The personal user information may include at least one of a password, gesture, face print, and fingerprint. The unique hash key may be generated in a software application, and the terminal communication means logs in the software application after the terminal communication means submits the acknowledge message. The access, e.g. the virtual memory, may be generated in the software application of the terminal communication means.

The class 2 message may be a class 2 short message service (SMS) message. The class 2 short message may be submitted through a wireless communication network.

The processor may be at least one of an embedded controller and a board management controller. The processor may be a microcontroller. The processor may be configured for at least one of the functions of the communication means of power sequencing, reset sequencing, thermal management, debug interfacing, and firmware loading.

Antennas of the first number of active antennas may include one or more main antenna of the communication means.

In case the communication means may be located in a home location, data may be routed between the first communication means and the second communication means using a WiFi connection.

The communication means may include a screen for displaying information, and, the screen may be switched off in the reduced power mode. The screen may also be switched off in the active mode in case the communication means is used only for data transfer.

The hash key may be generated in a software application installed on the another communication means and the communication means respectively. Access to a physical memory of the communication means may be provided to the other communication means as an access point or a virtual memory generated in the software application of the other communication means to provide access to the other communication means. Upon receiving of the class 2 message the communication means may be in an active mode or reduced power mode. The reduced power mode may include a first number of active antennas, and after verifying the unique hash key, the communication means may be in an active mode. The active mode may include a second number of active antennas, wherein the second number is higher than the first number. In case the second communication means may be located in a home location, data may be routed between the other communication means and the communication means using a WiFi connection.

In the following, various aspects of the present disclosure will be illustrated:

Example 1a is a mobile communication device, including a first radio configured to process a first signal in a first frequency band, and a second radio configured to process a second signal in a second frequency band, wherein the first frequency band and the second frequency band are overlapping at least in part; and an antenna-plexer circuit, coupled to the first radio and the second radio, and including at least one shared antenna to send the first signal and the second signal, and the antenna-plexer circuit further including a combining circuit coupling the first radio and the second radio with the shared antenna, wherein the combining circuit includes at least one bulk acoustic wave filter configured as a band rejection filter having an injection loss gradient/attenuation slope in a range of at least less than about -15 dB/100MHz, e.g. -0.15 dB/MHz, from a cut-off frequency, e.g. the rejection loss may be at least -15 dB for out-of-band frequencies.

In Example 2a, the subject matter of Example 1a can optionally include that the first radio is a WiFi radio and the second radio is a 5G radio.

In Example 3a, the subject matter of Example 1a or 2a can optionally include that the first frequency band and the second frequency band includes one or more frequency bands in a range from about 2.4 GHz to about 7 GHz, respectively.

In Example 4a, the subject matter of any one of Examples 1a to 3a can optionally include that the first frequency band includes a first sub-band including a frequency of about 2.4 GHz, and a second sub-band in a range from about 5 GHz to about 7 GHz.

In Example 5a, the subject matter of any one of Examples 1a to 4a can optionally include that the second frequency band includes one or more frequency bands in a range from about 1.7 GHz to about 5 GHz.

In Example 6a, the subject matter of any one of Examples 1a to 5a can optionally include that the second frequency band includes a first sub-band in a range from about 1.7 GHz to about 2.7 GHz, and a second sub-band in a range from about 3.3 GHz to about 5 GHz.

In Example 7a, the subject matter of any one of Examples 1a to 6a can optionally include that the band rejection filter is configured to have an insertion loss of less than about 0.5 dB for the first signal and the second signal.

In Example 8a, the subject matter of any one of Examples 1a to 7a can optionally include that the band rejection filter has an injection loss of at least -15 dB, e.g. at least -20 dB, for out-of-band frequencies.

In Example 9a, the subject matter of any one of Examples 1a to 8a can optionally include that the shared antenna is a wideband antenna configured for a frequency range from about 1.7 GHz to about 7 GHz.

In Example 10a, the subject matter of any one of Examples 1a to 9a can optionally include that the combining circuit includes a quadplexer, the quadplexer including an antenna port coupled to the shared antenna, a first radio port coupled to the first radio and a second radio port coupled to the second radio.

In Example 11a, the subject matter of any one of Examples 1a to 10a can optionally include that the antenna-plexer circuit includes a first shared antenna configured for a first sub-band of the first frequency band including an overlap with the second frequency band, and a second shared antenna configured for a second sub-band of the first frequency band including an overlap with the second frequency band.

In Example 12a, the subject matter of Example 11a can optionally include that each of the first radio and the second radio are coupled to the first shared antenna and the second shared antenna.

In Example 13a, the subject matter of any one of Examples 11a to 12a can optionally include that the first sub-band and the second sub-band are non-overlapping.

In Example 14a, the subject matter of any one of Examples 11a to 13a can optionally include that the first sub-band includes a frequency range from about 1.7 GHz to about 2.7 GHz.

In Example 15a, the subject matter of any one of Examples 11a to 14a can optionally include that the second sub-band includes for a frequency range from about 3.3 GHz to about 7.2 GHz.

In Example 16a, the subject matter of any one of Examples 1a to 15a can optionally include that the combining circuit includes a first diplexer coupling the first shared antenna to the first radio and the second radio, and a second diplexer coupling the second shared antenna to the first radio and the second radio.

In Example 17a, the subject matter of Example 16a can optionally include that each of the first diplexer and the second diplexer includes at least one bulk acoustic wave filter configured as a band rejection filter having an injection loss gradient/attenuation slope in a range of about - 15 dB/100MHz to about from a cut-off frequency.

In Example 18a, the subject matter of Example 16a or 17a can optionally include that at least one of the band rejection filters of the first diplexer and the second diplexer is configured to have an insertion loss of less than about 0.5 dB for the first signal and the second signal.

In Example 19a, the subject matter of any one of Examples 16a to 18a can optionally include that at least one of the band rejection filters of the first diplexer and the second diplexer has an injection loss of at least -15 dB for out-of-band frequencies, e.g. -20 dB.

In Example 20a, the subject matter of any one of Examples 17a to 19a can optionally include that the first diplexer includes a band pass filter and a band stop filter, wherein the band stop filter is configured to pass signals having frequency except a predetermined frequency band and the band pass filter is configured to pass signals having the predetermined frequency band.

In Example 21a, the subject matter of Example 20a can optionally include that the first signal in the first sub-band includes the predetermined frequency band.

In Example 22a, the subject matter of Example 20a or 21a can optionally include that the first signal in the first sub-band is substantially free of frequencies out-of-band from the predetermined frequency band.

In Example 23a, the subject matter of any one of Examples 1a to 22a can optionally further include a coexistence management circuit, and wherein the combining circuit includes a radio frequency switch coupled to each of the at least one antenna, the first radio, the second radio and the coexistence management circuit, wherein the coexistence management circuit is configured to control the radio frequency switch depending on the frequencies of the first signal and the second signal.

In Example 24a, the subject matter of Example 23a can optionally include a first band rejection filter coupling the first radio with the radio frequency switch, and a second band rejection filter coupling the second radio with the radio frequency switch.

In Example 25a, the subject matter of Example 23a or 24a can optionally include that the radio frequency switch is configured to: couple the first radio to the at least one shared antenna; couple the second radio to the at least one shared antenna; couple each of the first radio and the second radio to the at least one shared antenna; and couple none of the first radio and the second radio to the at least one shared antenna.

In Example 26a, the subject matter of any one of Examples 1a to 25a can optionally include that the mobile communication device is a laptop computer or a smart phone.

In Example 27a, the subject matter of any one of Examples 1a to 26a can optionally include that out-of-band frequencies are out of the first frequency band and the second frequency band.

In Example 28a, the subject matter of any one of Examples 1a to 27a can optionally include that out-of-band frequencies are out of at least one of the first frequency band and the second frequency band.

In Example 29a, the subject matter of any one of Examples 1a to 28a can optionally include that out-of-band frequencies are out of the overlapping frequency band of the first frequency band and the second frequency band.

Example 30a is a mobile communication means, including a means for processing a first signal in a first frequency band, and a means for processing a second signal in a second frequency band, wherein the first frequency band and the second frequency band are overlapping at least in part; an antenna-plexing means for processing the first signal and the second signal using at least one shared antenna, the antenna-plexing means including the shared antenna and a combining means for coupling the means for communicating the first signal and the means for communicating the second signal with the shared antenna, wherein the combining means includes at least one bulk acoustic wave filter configured as a band rejection filter having an injection loss gradient/attenuation slope having an amount of at least -15 dB/100MHz (e.g. -0.15dB/MHz) from a cut-off frequency.

In Example 31a, the subject matter of Example 30a can optionally include that the means for communicating the first signal is a WiFi radio and the means for communicating the second signal is a 5G radio.

In Example 32a, the subject matter of Example 30a or 31a can optionally include that the first frequency band and the second frequency band includes one or more frequency bands in a range from about 2.4 GHz to about 7 GHz, respectively.

In Example 33a, the subject matter of any one of Examples 30a to 32a can optionally include that the first frequency band includes a first sub-band including a frequency of about 2.4 GHz, and a second sub-band in a range from about 5 GHz to about 7 GHz.

In Example 34a, the subject matter of any one of Examples 30a to 33a can optionally include that the second frequency band includes one or more frequency bands in a range from about 1.7 GHz to about 5 GHz.

In Example 35a, the subject matter of any one of Examples 30a to 34a can optionally include that the second frequency band includes a first sub-band in a range from about 1.7 GHz to about 2.7 GHz, and a second sub-band in a range from about 3.3 GHz to about 5 GHz.

In Example 36a, the subject matter of any one of Examples 30a to 35a can optionally include that the band rejection means includes an insertion loss of about 0.5 dB for the first signal and the second signal.

In Example 37a, the subject matter of any one of Examples 30a to 36a can optionally include that the band rejection means has an injection loss of at least -15 dB, e.g. at least -20 dB, for out-of-band frequencies.

In Example 38a, the subject matter of any one of Examples 30a to 37a can optionally include that the shared antenna is a wideband antenna for a frequency range from about 1.7 GHz to about 7 GHz.

In Example 39a, the subject matter of any one of Examples 30a to 38a can optionally include that the combining means includes a quadplexing means for coupling the shared antenna to each of the means for communicating the first signal and the means for communicating the second signal.

In Example 40a, the subject matter of any one of Examples 30a to 39a can optionally include that the antenna-plexer means includes a first shared antenna configured for a first sub-band of the first frequency band including an overlap with the second frequency range, and a second shared antenna configured for a second sub-band of the first frequency band including an overlap with the second frequency range.

In Example 41a, the subject matter of Example 40a can optionally include that each of the means for communicating the first signal and the means for communicating the second signal are coupled to the first shared antenna and the second shared antenna.

In Example 42a, the subject matter of Example 40a or 41a can optionally include that the first sub-band and the second sub-band are non-overlapping.

In Example 43a, the subject matter of any one of Examples 40a to 42a can optionally include that the first sub-band includes a frequency range from about 1.7 GHz to about 2.7 GHz.

In Example 44a, the subject matter of any one of Examples 40a to 43a can optionally include that the second sub-band includes a frequency range from about 3.3 GHz to about 7.2 GHz.

In Example 45a, the subject matter of any one of Examples 30a to 44a can optionally include that the combining means includes a first diplexing means for coupling the first shared antenna to the means for communicating the first signal and the means for communicating the second signal, and a second duplexing means coupling the second shared antenna to the means for communicating the first signal and the means for communicating the second signal.

In Example 46a, the subject matter of Example 45a can optionally include that each of the first diplexing means and the second diplexing means includes a band rejection means having an injection loss of at least -15 dB, e.g. at least -20 dB, for out-of-band frequencies.

In Example 47a, the subject matter of Example 46a can optionally include that at least one of the band rejection means of the first diplexing means and the second diplexing means to have an insertion loss of less than about 0.5 dB for the first signal and the second signal.

In Example 48a, the subject matter of Example 46a or 47a can optionally include that at least one of the band rejection means of the first diplexing means and the second diplexing means includes at least one bulk acoustic wave filter configured as a band rejection filter having an attenuation slope having an amount of at least 0.15 dB/MHz, e.g. -15 dB/100MHz at a cut-off frequency.

In Example 49a, the subject matter of any one of Examples 46a to 48a can optionally include that at least one of the first diplexing means includes a band pass means and a band stop means, wherein the band stop means pass signals having frequency except a predetermined frequency band and the band pass means pass signals having the predetermined frequency band.

In Example 50a, the subject matter of Example 49a can optionally include that the first signal in the first sub-band includes the predetermined frequency band.

In Example 51a, the subject matter of Example 49a to 50a can optionally include that the first signal in the first sub-band is substantially free of frequencies out-of-band from the predetermined frequency band.

In Example 52a, the subject matter of any one of Example 33a to 51a can optionally further include a coexistence manager means for switching between the at least one antenna and at least one of the first radio, the second radio and a stub depending on the frequencies of the first signal and the second signal.

In Example 53a, the subject matter of any one of Examples 30a to 52a can optionally include that the mobile the communication means is a laptop computer or a smart phone.

In Example 54a, the subject matter of any one of Examples 30a to 53a can optionally include that out-of-band frequencies are out of the first frequency band and the second frequency band.

In Example 55a, the subject matter of any one of Examples 30a to 54a can optionally include that out-of-band frequencies are out of at least one of the first frequency band and the second frequency band.

In Example 56a, the subject matter of any one of Examples 30a to 55a can optionally include that out-of-band frequencies are out of the overlapping frequency band of the first frequency band and the second frequency band.

Example 57a is a mobile communication device, including a first radio configured to process a first signal in a first frequency band, and a second radio configured to process a second signal in a second frequency band, wherein the first frequency band and the second frequency band are overlapping at least in part; and an antenna-plexer circuit, coupled to the first radio and the second radio, and including at least one shared antenna to receive the first signal and the second signal, and the antenna-plexer circuit further including a combining circuit coupling the first radio and the second radio with the shared antenna, wherein the combining circuit includes at least one bulk acoustic wave filter configured as a band rejection filter having an attenuation slope having an amount of at least about 0.15 dB/MHz, e.g. -15 dB/100 MHz, at the cut-off frequency.

In Example 58a, the subject matter of Example 57a can optionally include that the first radio is a WiFi radio and the second radio is a 5G radio.

In Example 59a, the subject matter of Example 57a or 58a can optionally include that the first frequency band and the second frequency band includes one or more frequency bands in a range from about 2.4 GHz to about 7 GHz, respectively.

In Example 60a, the subject matter of any one of Examples 57a to 59a can optionally include that the first frequency band includes a first sub-band including a frequency of about 2.4 GHz, and a second sub-band in a range from about 5 GHz to about 7 GHz.

In Example 61a, the subject matter of any one of Examples 57a to 60a can optionally include that the second frequency band includes one or more frequency bands in a range from about 1.7 GHz to about 5 GHz.

In Example 62a, the subject matter of any one of Examples 57a to 61a can optionally include that the second frequency band includes a first sub-band in a range from about 1.7 GHz to about 2.7 GHz, and a second sub-band in a range from about 3.3 GHz to about 5 GHz.

In Example 63a, the subject matter of any one of Examples 57a to 62a can optionally include that the band rejection filter is configured to have an insertion loss of less than about 0.5 dB for the first signal and the second signal.

In Example 64a, the subject matter of any one of Examples 57a to 63a can optionally include that the band rejection filter has an injection loss of at least -15 dB, e.g. at least -20 dB, for out-of-band frequencies.

In Example 65a, the subject matter of any one of Examples 57a to 64a can optionally include that the shared antenna is a wideband antenna configured for a frequency range from about 1.7 GHz to about 7 GHz.

In Example 66a, the subject matter of any one of Examples 57a to 65a can optionally include that the combining circuit includes a quadplexer, the quadplexer including an antenna port coupled to the shared antenna, a first radio port coupled to the first radio and a second radio port coupled to the second radio.

In Example 67a, the subject matter of any one of Examples 57a to 66a can optionally include that the antenna-plexer circuit includes a first shared antenna configured for a first sub-band of the first frequency band including an overlap with the second frequency band, and a second shared antenna configured for a second sub-band of the first frequency band including an overlap with the second frequency band.

In Example 68a, the subject matter of Example 67a can optionally include that each of the first radio and the second radio are coupled to the first shared antenna and the second shared antenna.

In Example 69a, the subject matter of any one of Examples 67a to 68a can optionally include that the first sub-band and the second sub-band are non-overlapping.

In Example 70a, the subject matter of any one of Examples 67a to 69a can optionally include that the first sub-band includes for a frequency range from about 1.7 GHz to about 2.7 GHz.

In Example 71a, the subject matter of any one of Examples 67a to 70a can optionally include that the second sub-band includes for a frequency range from about 3.3 GHz to about 7.2 GHz.

In Example 72a, the subject matter of any one of Examples 57a to 71a can optionally include that the combining circuit includes a first diplexer coupling the first shared antenna to the first radio and the second radio, and a second diplexer coupling the second shared antenna to the first radio and the second radio.

In Example 73a, the subject matter of Example 72a can optionally include that each of the first diplexer and the second diplexer includes at least one bulk acoustic wave filter configured as a band rejection filter having an attenuation slope having an amount of at least about 0.15 dB/MHz, e.g. -15 dB/100 MHz, at the cut-off frequency.

In Example 74a, the subject matter of Example 72a or 73a can optionally include that at least one of the band rejection filters of the first diplexer and the second diplexer is configured to have an insertion loss of less than about 0.5 dB for the first signal and the second signal.

In Example 75a, the subject matter of any one of Examples 72a to 74a can optionally include that at least one of the band rejection filters of the first diplexer and the second diplexer has an injection loss of at least 20 dB for out-of-band frequencies.

In Example 76a, the subject matter of any one of Examples 72a to 75a can optionally include that the first diplexer includes a band pass filter and a band stop filter, wherein the band stop filter is configured to pass signals having frequency except a predetermined frequency band and the band pass filter is configured to pass signals having the predetermined frequency band.

In Example 77a, the subject matter of Example 76a can optionally include that the first signal in the first sub-band includes the predetermined frequency band.

In Example 78a, the subject matter of Example 76a or 77a can optionally include that the first signal in the first sub-band is substantially free of frequencies out-of-band from the predetermined frequency band.

In Example 79a, the subject matter of any one of Examples 57a to 78a can optionally further include a coexistence management circuit, and wherein the combining circuit includes a radio frequency switch coupled to each of the at least one antenna, the first radio, the second radio and the coexistence management circuit, wherein the coexistence management circuit is configured to control the radio frequency switch depending on the frequencies of the first signal and the second signal.

In Example 80a, the subject matter of Example 79a can optionally include a first band rejection filter coupling the first radio with the radio frequency switch, and a second band rejection filter coupling the second radio with the radio frequency switch.

In Example 81a, the subject matter of Example 79a or 80a can optionally include that the radio frequency switch is configured to: couple the first radio to the at least one shared antenna; couple the second radio to the at least one shared antenna; couple each of the first radio and the second radio to the at least one shared antenna; and couple none of the first radio and the second radio to the at least one shared antenna.

In Example 82a, the subject matter of any one of Examples 57a to 81a can optionally include that the mobile communication device is a laptop computer or a smart phone.

In Example 83a, the subject matter of any one of Examples 57a to 82a can optionally include that out-of-band frequencies are out of the first frequency band and the second frequency band.

In Example 84a, the subject matter of any one of Examples 57a to 83a can optionally include that out-of-band frequencies are out of at least one of the first frequency band and the second frequency band.

In Example 85a, the subject matter of any one of Examples 57a to 84a can optionally include that out-of-band frequencies are out of the overlapping frequency band of the first frequency band and the second frequency band.

Example 1b is a communication device having a processor configured to: generate a hash key; send the hash key using a class 2 message in a cellular wireless wide area network (WWAN) to a terminal communication device; receive an acknowledge message from the terminal communication device; and, after having received the acknowledge message, provide an access for the communication device to a physical memory of the terminal communication device, e.g. generate a virtual memory for the communication device using a physical memory of the terminal communication device. The cellular WWAN may be a 3GPP WWAN for example.

In Example 2b, the subject matter of Example 1b can optionally include that the communication device further includes a memory having instructions stored therein, when executed by the processor, cause the processor to implement the features of Example 1b.

In Example 3b, the subject matter of Example 1b or 2b can optionally include that the hash key is a unique hash key in at least a part of the 3GPP wireless wide area network.

In Example 4b, the subject matter of any one of Examples 1b to 3b can optionally include that the hash key is based on a personal user information.

In Example 5b, the subject matter Examples 4b can optionally include that the personal user information includes at least one of a password, gesture, face print, and fingerprint.

In Example 6b, the subject matter of any one of Examples 1b to 5b can optionally include that the hash key is generated in a software application.

In Example 7b, the subject matter of any one of Examples 1b to 6b can optionally include that the class 2 message is a class 2 short message service (SMS) message.

In Example 8b, the subject matter of any one of Examples 1b to 7b can optionally include that the communication device sends the class 2 message through a wireless wide area communication network.

In Example 9b, the subject matter of any one of Examples 1b to 8b can optionally include that the 3GPP wireless wide area network is one of a 3G, 4G, 5G, or 6G communication network.

In Example 10b, the subject matter of any one of Examples 1b to 9b can optionally include that the access, e.g. the virtual memory, is generated in the software application of the communication device.

Example 11b is a communication device having a processor configured to: receive, in a reduced power mode, a class 2 message in a cellular wireless wide area network from a terminal communication device, the class 2 message including a hash key, and the reduced power mode includes a first number of active antennas of the communication device; verify the hash key; activate, after having verified the hash key, an active mode of the communication device, the active mode including a second number of active antennas of the communication device, wherein the second number is larger than the first number; send an acknowledge message to the terminal communication device to allow a generation of an access, e.g. a virtual memory, for the terminal communication device using a physical memory of the communication device.

In Example 12b, the subject matter of Example 11b can optionally include that the communication device further includes a memory having instructions stored therein, when executed by the processor, cause the processor to implement the features of Example 1b.

In Example 13b, the subject matter of any one of Examples 11b to 12b can optionally include that the hash key is a unique hash key at least in part of the 3GPP wireless wide area network.

In Example 14b, the subject matter of any one of Examples 11b to 13b can optionally include that the hash key is based on a personal user information.

In Example 15b, the subject matter of Example 14b can optionally include that the personal user information includes at least one of a password, gesture, face print, and fingerprint.

In Example 16b, the subject matter of any one of Examples 11b to 15b can optionally include that the hash key is generated in a software application, and the terminal communication device logs in the software application before or after the terminal communication device submits the acknowledge message.

In Example 17b, the subject matter of any one of Examples 11b to 16b can optionally include that the software application of the terminal communication device generates the access, e.g. the virtual memory, in the software application of the terminal communication device.

In Example 18b, the subject matter of any one of Examples 11b to 17b can optionally include that the class 2 message is a class 2 short message service (SMS) message.

In Example 19b, the subject matter of any one of Examples 11b to 18b can optionally include that the communication device receives the class 2 short message through a wireless wide area communication network.

In Example 20b, the subject matter of any one of Examples 11b to 19b can optionally include that the 3GPP wireless wide area network is one of a 3G, 4G, 5G, or 6G communication network.

In Example 21b, the subject matter of any one of Examples 11b to 20b can optionally include that the processor is at least one of an embedded controller and a board management controller.

In Example 22b, the subject matter of any one of Examples 11b to 21b can optionally include that the processor is a microcontroller.

In Example 23b, the subject matter of any one of Examples 11b to 22b can optionally include that the processor is configured for at least one of the functions of the communication device of power sequencing, reset sequencing, thermal management, debug interfacing, and firmware loading.

In Example 24b, the subject matter of any one of Examples 11b to 23b can optionally include that the antennas of the first number of active antennas include one or more main antenna of the communication device.

In Example 25b, the subject matter of any one of Examples 11b to 24b can optionally include that in case the communication device is located in a home location, data are routed between the communication device and the terminal communication device using a WiFi link.

In Example 26b, the subject matter of any one of Examples 11b to 25b can optionally include that the communication device includes a screen that is switched off in the reduced power mode.

In Example 27b, the subject matter of Example 26b can optionally include that the screen is switched off in the active mode.

In Example 28b, the subject matter of any one of Examples 11b to 27b can optionally include that the reduced power mode includes a sleep state or a connected standby state.

In Example 29b, the subject matter of any one of Examples 11b to 28b can optionally include that the reduced power mode includes a hibernate state, a flight mode state, or a shutdown state.

In Example 30b, the subject matter of any one of Examples 11b to 29b can optionally include that before entering the reduced power mode, the communication device the number of active antennas is reduced to a Main Antenna.

Example 31b is a communication means including: a means for generating a hash key in a first communication means; a means for transmitting the hash key using a class 2 message in a cellular wireless wide area network to a second communication means; a means for verifying the hash key in the second communication means; a means for acknowledging the verified hashed key to the first communication means; and a means for upgrading the number of active antennas in the second communication means; a means to generate an access for the first communication means using a physical memory provide of the second communication means, e.g. generating a virtual memory for the first communication means using a physical memory provide of the second communication means.

In Example 32b, the subject matter of Example 31b can optionally include that the hash key is a unique hash key at least in part of the 3GPP wireless wide area network.

In Example 33b, the subject matter of any one of Examples 31b to 32b can optionally include that the hash key is based on a personal user information.

In Example 34b, the subject matter of Example 33b can optionally include that the personal user information includes at least one of a password, gesture, face print, and fingerprint.

In Example 35b, the subject matter of any one of Examples 31b to 34b can optionally include that the hash key is generated in a software application, and the terminal communication means logs in the software application before or after the terminal communication means submits the acknowledge message.

In Example 36b, the subject matter of any one of Examples 31b to 35b can optionally include that the software application of the terminal communication means generates the access, e.g. the virtual memory, in the software application of the terminal communication means.

In Example 37b, the subject matter of any one of Examples 31b to 36b can optionally include that the class 2 message is a class 2 short message service (SMS) message.

In Example 38b, the subject matter of any one of Examples 31b to 32b can optionally include that the first communication means sends the class 2 message through a wireless wide area communication network, and the second communication means receives the class 2 message through the wireless wide area communication network.

In Example 39b, the subject matter of any one of Examples 31b to 38b can optionally include that the 3GPP wireless wide area network is one of a 3G, 4G, 5G, or 6G communication network.

In Example 40b, the subject matter of any one of Examples 31b to 39b can optionally include that the second communication means includes at least one of an embedded controller and a board management controller.

In Example 41b, the subject matter of Example 40b can optionally include that the controller is a microcontroller.

In Example 42b, the subject matter of any one of Examples 40b to 41b can optionally include that the controller is configured for at least one of the functions of the communication means of power sequencing, reset sequencing, thermal management, debug interfacing, and firmware loading.

In Example 43b, the subject matter of any one of Examples 31b to 42b can optionally include that antennas of the first number of active antennas include one or more main antenna of the communication means.

In Example 44b, the subject matter of any one of Examples 31b to 43b can optionally include that, in case the communication means is located in a home location, data are routed between the first communication means and the second communication means using a WiFi link.

In Example 45b, the subject matter of any one of Examples 31b to 44b can optionally include that the second communication means includes a screen, and the screen is switched off in the reduced power mode.

In Example 46b, the subject matter of any one of Examples 31b to 45b can optionally include that access to the memory of the second communication means is provided to the first communication means as a virtual memory generated in the software application of the first communication means.

In Example 47b, the subject matter of any one of Examples 31b to 46b can optionally include that upon receiving of the class 2 message the second communication means is in a reduced power mode, wherein the reduced power mode includes a first number of active antennas, and after verifying the unique hash key the second communication means is in an active mode, wherein the active mode includes a second number of active antennas larger the first number.

In Example 48b, the subject matter of Example 47b can optionally include that the reduced power mode includes a sleep state or a connected standby state.

In Example 49b, the subject matter of any one of Examples 47b or 48b can optionally include that the reduced power mode includes a hibernate state, a flight mode state, or a shutdown state.

In Example 50b, the subject matter of any one of Examples 47b to 49b can optionally include that before entering the reduced power mode, the second communication means the number of active antennas is reduced to a Main Antenna.

In Example 51b, the subject matter of any one of Examples 47b to 50b can optionally include that the second communication means includes a displaying means, e.g. a screen, that is switched off in the reduced power mode.

In Example 52b, the subject matter of Example 51b can optionally include that the displaying means is switched off in the active mode.

In Example 53b, the subject matter of any one of Examples 31b to 52b can optionally include that the hash key is generated in a software application installed on the first communication means and the second communication means respectively.

Example 1c is a wireless communication device, configured to determine a quality of a first wireless communication link between another communication device and a radio network; and to provide a second wireless communication link between the other communication device and the communication device when the determined quality of the first wireless communication link falls below a predetermined threshold value; and to establish a third wireless communication link between the communication device and the radio network or another radio network, to thereby establish a communication connection between the other communication device and the radio network or the other radio network; the communication connection including the second wireless communication link and the third wireless communication link.

In Example 2c, the subject matter of Example 1c can optionally include that the radio network is a WiFi network.

In Example 3c, the subject matter of Example 1c or 2c can optionally include that the communication device is further configured to establish the third communication link between the communication device and the radio network and a fourth communication link between the communication device and the other radio network. The other radio network may be isolated from the radio network. The communication connection may include the second wireless communication link and the fourth wireless communication link.

In Example 4c, the subject matter of Example 3c can optionally include that the radio network is a WiFi network and the other radio network is a cellular wireless wide area network (WWAN). The cellular WWAN may be a 3GPP network, e.g. a 4G, 5G or 6G network.

In Example 5c, the subject matter of Example 1c or 4c can optionally include that the communication device is further configured to determine a third quality of the third communication link and a fourth quality of the fourth communication link, to compare the third quality with the fourth quality, and to determine the communication link of the third communication link and the fourth communication link having a higher quality value. The communication connection may include the second wireless communication link and the communication link of the third communication link and the fourth communication link having a higher quality value.

In Example 6c, the subject matter of any one of Examples 1c to 5c can optionally include that the quality of the first wireless communication link is a first quality and the communication device is further configured to determine a third quality of the third communication link, compare the first quality with the third quality, and determine the communication link of the first communication link and the third communication link having a higher quality value. In case the first quality is equal to or higher than the third quality, the other communication device may not provide the second communication link.

In Example 7c, the subject matter of Example 6c can optionally include that the communication device is further configured to provide the second communication link in case the third quality is higher than the first quality.

In Example 8c, the subject matter of any one of Examples 5c to 7c can optionally include that the communication device is further configured to select the network of the radio network and the other radio network corresponding to the communication link having the higher quality value to pass on the communication of the other communication device via the second communication link.

In Example 9c, the subject matter of any one of Examples 5c to 8c can optionally include that the communication device is further configured to provide the second communication link in case any one of the third quality and fourth quality is higher than the first quality.

In Example 10c, the subject matter of any one of Examples 3c to 9c can optionally include that, in case of a formed second wireless communication link, the communication device pass on communications from the other communication device to the network corresponding to communication link having the higher quality.

In Example 11c, the subject matter of any one of Examples 3c to 10c can optionally include that, in case of a formed second wireless communication link, the communication device pass on communications from the other communication device to the other radio network via the fourth communication link.

In Example 12c, the subject matter of any one of Examples 3c to 11c can optionally include that in case of a formed second wireless communication link, the communication device pass on communications from the other communication device to the radio network via the third communication link.

In Example 13c, the subject matter of any one of Examples 1c to 12c can optionally include that the radio network is a broadcast network.

In Example 14c, the subject matter of any one of Examples 1c to 12c can optionally include that the radio network is a first WiFi network having a first SSID and the other network is a second WiFi network having a second SSID different from the first SSID.

In Example 15c, the subject matter of any one of Examples 1c to 14c can optionally include that the second wireless communication link is a directional communication link.

In Example 16c, the subject matter of any one of Examples 1c to 14c can optionally include that the second wireless communication link is one of a WiFi link or Bluetooth link.

In Example 17c, the subject matter of any one of Examples 1c to 16c can optionally include that the other communication device is a laptop computer or personal computer.

In Example 18c, the subject matter of any one of Examples 1c to 17c can optionally include that the communication device is a smartphone, a tablet computer, a phone, or a laptop computer.

In Example 19c, the subject matter of any one of Examples 1c to 18c can optionally include that the communication device is configured to determine the quality of the first wireless communication link at a predetermined frequency.

In Example 20c, the subject matter of any one of Examples 1c to 19c can optionally include that, in case the quality of the first wireless communication link falls below the predetermined threshold value, the communication device is configured to increase the frequency for determining the quality of the first wireless communication link from a first frequency value to a second frequency value.

In Example 21c, the subject matter of any one of Examples 1c to 20c can optionally include that, in case the other communication device does establish second wireless communication link within a predetermined time period after the quality of the first wireless communication link fell below the predetermined threshold value, the communication device is configured to decrease the frequency for determining the quality of the first wireless communication link from the second frequency value to the first frequency value.

In Example 22c, the subject matter of any one of Examples 1c to 21c can optionally include that, in case the quality of the first wireless communication link falls below the predetermined threshold value, the communication device is configured to establish the second wireless communication link.

In Example 23c, the subject matter of any one of Examples 1c to 22c can optionally include that the communication device is configured to determine the quality of the first wireless communication link using the received signal strength indication (RSSI) value of the first wireless communication link.

In Example 24c, the subject matter of Example 23c can optionally include that the radio network provides the RSSI value of the first wireless communication link to the communication device.

In Example 25c, the subject matter of any one of Examples 1c to 24c can optionally further include at least one third communication device communicatively coupled to the radio network and the communication device.

In Example 26c, the subject matter of Example 25c can optionally include that the third communication device is communicatively coupled to the other communication device and the communication device via Bluetooth connections.

In Example 27c, the subject matter of any one of Examples 25c to 26c can optionally include that the third communication device provides the RSSI value of its wireless communication link with the radio network to the communication device.

In Example 28c, the subject matter of any one of Examples 25c to 27c can optionally include that the third communication device provides the quality of its wireless communication link with the radio network to the communication device using a user datagram protocol (UDP) socket.

In Example 29c, the subject matter of any one of Examples 1c to 28c can optionally include that the communication device further includes a processor configured to compare the quality of the first communication link with the quality of the third communication link, and to establish the second communication link based on the result of the comparison.

In Example 30c, the subject matter of Example 29c can optionally include that the communication device further includes a memory having instructions stored therein that when executed by the processor cause the processor to perform the process of Example 29c.

Example 31c is a wireless communication system, including: a first wireless communication device configured to establish a first wireless communication link between the first wireless communication device and a first radio network, and to establish a second wireless communication link between the first wireless communication device and a second communication device; and a second wireless communication device configured to establish a third wireless communication link between the second wireless communication device and the first radio network or a second network, and to provide the second wireless communication link between the second wireless communication device and the first communication device, wherein the second wireless communication device is configured to determine a quality of the first wireless communication link, and to provide the second wireless communication link when the determined quality of the first wireless communication link falls below a predetermined threshold value to thereby establish a communication connection between the first wireless communication device and the first radio network or the second radio network; the communication connection including the second wireless communication link and the third wireless communication link.

In Example 32c, the subject matter of Example 1c can optionally include that the first radio network is a WiFi network.

In Example 33c, the subject matter of Example 31c or 32 c can optionally include that the second wireless communication device is further configured to establish the third communication link between the communication device and the radio network and a fourth communication link between the communication device and the other radio network. The second radio network may be isolated from the first radio network. The communication connection may include the second wireless communication link and the fourth wireless communication link.

In Example 34c, the subject matter of Example 33c can optionally include that the first radio network is a WiFi network and the second radio network is a cellular wireless wide area network (WWAN). The cellular WWAN may be a 3GPP network, e.g. a 4G, 5G or 6G network.

In Example 35c, the subject matter of Example 33c or 34c can optionally include that the second wireless communication device is further configured to determine a third quality of the third communication link and a fourth quality of the fourth communication link, to compare the third quality with the fourth quality, and to determine the communication link of the third communication link and the fourth communication link having a higher quality value. The communication connection may include the second wireless communication link and the communication link of the third communication link and the fourth communication link having a higher quality value.

In Example 36c, the subject matter of Example 35c can optionally include that the quality of the first wireless communication link is a first quality and the second wireless communication device is further configured to determine a third quality of the third communication link, to compare the first quality with the third quality, and determine the communication link of the first communication link and the third communication link having a higher quality value. In case the first quality is equal to or higher than the third quality, the second wireless communication device may not provide the second communication link.

In Example 37c, the subject matter of Example 35c can optionally include that the second wireless communication device further configured to provide the second communication link in case the third quality is higher than the first quality.

In Example 38c, the subject matter of any one of Examples 35c to 37c can optionally include that the second wireless communication device is further configured to select the network of the first radio network and the second radio network corresponding to the communication link having the higher quality value to pass on the communication of the first wireless communication device via the second communication link.

In Example 39c, the subject matter of any one of Examples 35c to 38c can optionally include that the second wireless communication device is further configured to provide the second communication link in case any one of the third quality and fourth quality is higher than the first quality.

In Example 40c, the subject matter of any one of Examples 33c to 39c can optionally include that, in case of a formed second wireless communication link, the second wireless communication device pass on communications from the first wireless communication device to the network corresponding to communication link having the higher quality.

In Example 41c, the subject matter of any one of Examples 33c to 40c can optionally include that, in case of a formed second wireless communication link, the second wireless communication device pass on communications from the first wireless communication device to the second radio network via the fourth communication link.

In Example 42c, the subject matter of any one of Examples 33c to 41c can optionally include that in case of a formed second wireless communication link, the second wireless communication device pass on communications from the first wireless communication device to the first radio network via the third communication link.

In Example 43c, the subject matter of any one of Examples 31c to 42c can optionally include that the first radio network is a broadcast network.

In Example 44c, the subject matter of any one of Examples 31c to 42c can optionally include that the first radio network is a first WiFi network having a first SSID and the other network is a second WiFi network having a second SSID different from the first SSID.

In Example 45c, the subject matter of any one of Examples 31c to 44c can optionally include that the second wireless communication link is a directional communication link.

In Example 46c, the subject matter of any one of Examples 31c to 44c can optionally include that the second wireless communication link is one of a WiFi link or Bluetooth link.

In Example 47c, the subject matter of any one of Examples 31c to 46c can optionally include that the first wireless communication device is a laptop computer or personal computer.

In Example 48c, the subject matter of any one of Examples 31c to 47c can optionally include that the second wireless communication device is a smartphone, a tablet computer, a phone, or a laptop computer.

In Example 49c, the subject matter of any one of Examples 31c to 48c can optionally include that the second wireless communication device is configured to determine the quality of the first wireless communication link at a predetermined frequency.

In Example 50c, the subject matter of any one of Examples 31c to 49c can optionally include that, in case the quality of the first wireless communication link falls below the predetermined threshold value, the second wireless communication device increases the frequency for determining the quality of the first wireless communication link from a first frequency value to a second frequency value.

In Example 51c, the subject matter of any one of Examples 31c to 50c can optionally include that, in case the first wireless communication device does establish second wireless communication link within a predetermined time period after the quality of the first wireless communication link fell below the predetermined threshold value the second wireless communication device decreases the frequency for determining the quality of the first wireless communication link from the second frequency value to the first frequency value.

In Example 52c, the subject matter of any one of Examples 31c to 51c can optionally include that, in case the quality of the first wireless communication link falls below the predetermined threshold value, the second wireless communication device establishes the second wireless communication link.

In Example 53c, the subject matter of any one of Examples 31c to 52c can optionally include that the quality of the first wireless communication link is determined using the received signal strength indication (RSSI) value of the first wireless communication link.

In Example 54c, the subject matter of Example 53c can optionally include that the first radio network provides the RSSI value of the first wireless communication link to the second communication device.

In Example 55c, the subject matter of any one of Examples 31c to 54c can optionally further include at least one third communication device communicatively coupled to the first radio network and the second communication device.

In Example 56c, the subject matter of Example 55c can optionally include that the third communication device is communicatively coupled to the first wireless communication device and the second wireless communication device via Bluetooth connections.

In Example 57c, the subject matter of any one of Examples 55c to 56c can optionally include that the third communication device provides the RSSI value of its wireless communication link with the first radio network to the second communication device.

In Example 58c, the subject matter of any one of Examples 55c to 57c can optionally include that the third communication device provides the quality of its wireless communication link with the first radio network to the second wireless communication device using a user datagram protocol (UDP) socket.

In Example 59c, the subject matter of any one of Examples 31c to 58c can optionally include that the second wireless communication device further includes a processor configured to compare the quality of the first communication link with the quality of the third communication link, and to establish the second communication link based on the result of the comparison.

In Example 60c, the subject matter of any one of Examples 31c to 58c can optionally include that the second wireless communication device further includes a processor and a memory having instructions stored therein that when executed by the processor cause the processor to compare the quality of the first communication link with the quality of the third communication link, and to establish the second communication link based on the result of the comparison.

Example 61c is a wireless communication means, including: a first communication means for establishing a first wireless communication connection between the first communication means and a first radio network, and for establishing a second wireless communication connection between the first communication means and a second communication means; and a second communication means for establishing a third wireless communication link between the second communication means and the first radio network or a second network, and for providing the second wireless communication link between the second communication means and the first communication means, wherein the second communication means is further for determining a quality of the first wireless communication link, and for providing the second wireless communication link when the determined quality of the first wireless communication link falls below a predetermined threshold value to thereby establish a communication connection between the first communication means and the first radio network or the second radio network; the communication connection including the second wireless communication link and the third wireless communication link.

In Example 62c, the subject matter of Example 61c can optionally include that the first radio network is a WiFi network.

In Example 63c, the subject matter of Example 61c or 62 c can optionally include that the second communication means is further configured to establish the third communication link between the second communication means and the first radio network and a fourth communication link between the second communication means and the second radio network. The second radio network may be isolated from the first radio network. The communication connection may include the second wireless communication link and the fourth wireless communication link.

In Example 64c, the subject matter of Example 63c can optionally include that the first radio network is a WiFi network and the second radio network is a cellular wireless wide area network (WWAN). The cellular WWAN may be a 3GPP network, e.g. a 4G, 5G or 6G network.

In Example 65c, the subject matter of Example 63c or 64c can optionally include that the second communication means is further configured to determine a third quality of the third communication link and a fourth quality of the fourth communication link, to compare the third quality with the fourth quality, and to determine the communication link of the third communication link and the fourth communication link having a higher quality value. The communication connection may include the second wireless communication link and the communication link of the third communication link and the fourth communication link having a higher quality value.

In Example 66c, the subject matter of Example 65c can optionally include that the quality of the first wireless communication link is a first quality and the second communication means is further configured to determine a third quality of the third communication link, for comparing the first quality with the third quality, and for determining the communication link of the first communication link and the third communication link having a higher quality value. In case the first quality is equal to or higher than the third quality, the other communication device may not provide the second communication link.

In Example 67c, the subject matter of Example 65c can optionally include that the second communication means further configured to provide the second communication link in case the third quality is higher than the first quality.

In Example 68c, the subject matter of any one of Examples 65c to 67c can optionally include that the second communication means is further configured to select the network of the first radio network and the second radio network corresponding to the communication link having the higher quality value to pass on the communication of the first communication means via the second communication link.

In Example 69c, the subject matter of any one of Examples 65c to 68c can optionally include that the second communication means is further configured to provide the second communication link in case any one of the third quality and fourth quality is higher than the first quality.

In Example 70c, the subject matter of any one of Examples 63c to 69c can optionally include that, in case of a formed second wireless communication link, the second communication means pass on communications from the first communication means to the network corresponding to communication link having the higher quality.

In Example 71c, the subject matter of any one of Examples 63c to 70c can optionally include that, in case of a formed second wireless communication link, the second communication means pass on communications from the first communication means to the second radio network via the fourth communication link.

In Example 72c, the subject matter of any one of Examples 63c to 71c can optionally include that in case of a formed second wireless communication link, the second communication means pass on communications from the first communication means to the first radio network via the third communication link.

In Example 73c, the subject matter of any one of Examples 61c to 72c can optionally include that the first radio network is a broadcast network.

In Example 74c, the subject matter of any one of Examples 61c to 72c can optionally include that the first radio network is a first WiFi network having a first SSID and the other network is a second WiFi network having a second SSID different from the first SSID.

In Example 75c, the subject matter of any one of Examples 61c to 74c can optionally include that the second wireless communication link is a directional communication link.

In Example 76c, the subject matter of any one of Examples 61c to 74c can optionally include that the second wireless communication link is one of a WiFi link or Bluetooth link.

In Example 77c, the subject matter of any one of Examples 61c to 76c can optionally include that the first communication means is a laptop computer or personal computer.

In Example 78c, the subject matter of any one of Examples 61c to 77c can optionally include that the second communication means is a smartphone, a tablet computer, a phone, or a laptop computer.

In Example 79c, the subject matter of any one of Examples 61c to 78c can optionally include that the second communication means is configured to determine the quality of the first wireless communication link at a predetermined frequency.

In Example 80c, the subject matter of any one of Examples 61c to 79c can optionally include that, in case the quality of the first wireless communication link falls below the predetermined threshold value, the second communication means increases the frequency for determining the quality of the first wireless communication link from a first frequency value to a second frequency value.

In Example 81c, the subject matter of any one of Examples 61c to 80c can optionally include that, in case the first communication means does establish second wireless communication link within a predetermined time period after the quality of the first wireless communication link fell below the predetermined threshold value the second communication means decreases the frequency for determining the quality of the first wireless communication link from the second frequency value to the first frequency value.

In Example 82c, the subject matter of any one of Examples 61c to 81c can optionally include that, in case the quality of the first wireless communication link falls below the predetermined threshold value, the second communication means establishes the second wireless communication link.

In Example 83c, the subject matter of any one of Examples 61c to 82c can optionally include that the quality of the first wireless communication link is determined using the received signal strength indication (RSSI) value of the first wireless communication link.

In Example 84c, the subject matter of Example 63c can optionally include that the first radio network provides the RSSI value of the first wireless communication link to the second communication means.

In Example 85c, the subject matter of any one of Examples 61c to 84c can optionally further include at least one third communication means communicatively coupled to the first radio network and the second communication means.

In Example 86c, the subject matter of Example 85c can optionally include that the third communication means is communicatively coupled to the first communication means and the second communication means via Bluetooth connections.

In Example 87c, the subject matter of any one of Examples 85c to 86c can optionally include that the third communication means provides the RSSI value of its wireless communication link with the first radio network to the second communication means.

In Example 88c, the subject matter of any one of Examples 85c to 87c can optionally include that the third communication means provides the quality of its wireless communication link with the first radio network to the second communication means using a user datagram protocol (UDP) socket.

In Example 89c, the subject matter of any one of Examples 61c to 88c can optionally include that the second communication means further includes a processor configured to compare the quality of the first communication link with the quality of the third communication link, and to establish the second communication link based on the result of the comparison.

In Example 90c, the subject matter of any one of Examples 61c to 88c can optionally include that the second communication means further includes a processor and a memory having instructions stored therein that when executed by the processor cause the processor to compare the quality of the first communication link with the quality of the third communication link, and to establish the second communication link based on the result of the comparison.

Example 1d is a communication means including one or more of the subject matter of any one of Examples 1a to 85a, 1b to 53b, and 1c to 90c.

In Example 2d, the subject matter of Example 1d can optionally include a mobile communication device, including: a first radio configured to process a first signal in a first frequency band, and a second radio configured to process a second signal in a second frequency band, wherein the first frequency band and the second frequency band are overlapping at least in part; and an antenna-plexer circuit, coupled to the first radio and the second radio, and including at least one shared antenna to send the first signal and the second signal, and the antenna-plexer circuit further including a combining circuit coupling the first radio and the second radio with the shared antenna, wherein the combining circuit includes at least one bulk acoustic wave filter configured as a band rejection filter having an attenuation slope having an amount of at least about 0.15 dB/MHz, e.g. -15 dB/100 MHz, at the cut-off frequency.

In Example 3d, the subject matter of Example 2d can optionally include that the first radio is a WiFi radio and the second radio is a 5G radio.

In Example 4d, the subject matter of any one of Example 2d to 3d can optionally include that the first frequency band and the second frequency band includes one or more frequency bands in a range from about 2.4 GHz to about 7 GHz, respectively.

In Example 5d, the subject matter of any one of Examples 2d to 4d can optionally include that the combining circuit includes a quadplexer, the quadplexer including an antenna port coupled to the shared antenna, a first radio port coupled to the first radio and a second radio port coupled to the second radio.

In Example 6d, the subject matter of any one of Examples 2d to 5d can optionally include that the combining circuit includes a first diplexer coupling the first shared antenna to the first radio and the second radio, and a second diplexer coupling the second shared antenna to the first radio and the second radio.

In Example 7d, the subject matter of Example 6d can optionally include that each of the first diplexer and the second diplexer includes at least one bulk acoustic wave filter configured as a band rejection filter having an attenuation slope having an amount of at least about 0.15 dB/MHz, e.g. -15 dB/100 MHz, at the cut-off frequency.

In Example 8d, the subject matter of any one of Examples 6d to 7d can optionally include that the first diplexer includes a band pass filter and a band stop filter, wherein the band stop filter is configured to pass signals having frequency except a predetermined frequency band and the band pass filter is configured to pass signals having the predetermined frequency band.

In Example 9d, the subject matter of any one of Examples 2d to 8d can optionally further include a coexistence management circuit, and wherein the combining circuit includes a radio frequency switch coupled to each of the at least one antenna, the first radio, the second radio and the coexistence management circuit, wherein the coexistence management circuit is configured to control the radio frequency switch depending on the frequencies of the first signal and the second signal.

In Example 10d, the subject matter of Example 9d can optionally include a first band rejection filter coupling the first radio with the radio frequency switch, and a second band rejection filter coupling the second radio with the radio frequency switch.

In Example 11d, the subject matter of Example 9d or 10d can optionally include that the radio frequency switch is configured to: couple the first radio to the at least one shared antenna; couple the second radio to the at least one shared antenna; couple each of the first radio and the second radio to the at least one shared antenna; and couple none of the first radio and the second radio to the at least one shared antenna.

In Example 12d, the subject matter of any one of Examples 2d to 11d can optionally further include a processor configured to: generate a hash key; send the hash key using a class 2 message in a cellular wireless wide area network (WWAN) to a terminal communication device; receive an acknowledge message from the terminal communication device; and, after having received the acknowledge message, provide an access for the communication device to a physical memory of the terminal communication device, e.g. generate a virtual memory for the communication device using a physical memory of the terminal communication device. The cellular WWAN may be a 3GPP WWAN for example.

In Example 13d, the subject matter of any one of Examples 2d to 12d can optionally further include a processor configured to: receive, in a reduced power mode, a class 2 message in a 3GPP wireless wide area network from a terminal communication device, the class 2 message including a hash key, and the reduced power mode includes a first number of active antennas of the communication device; verify the hash key; activate, after having verified the hash key, an active mode of the communication device, the active mode including a second number of active antennas of the communication device, wherein the second number is larger than the first number; send an acknowledge message to the terminal communication device to allow a generation of an access to a physical memory of the communication device, e.g. generate a virtual memory for the terminal communication device using a physical memory of the communication device.

In Example 14d, the subject matter of any one of Examples 12d to 13d can optionally further include that the communication device sends the class 2 message through a wireless wide area communication network.

In Example15d, the subject matter of any one of Examples 12d to 14d can optionally further that the 3GPP wireless wide area network is one of a 3G, 4G, 5G, or 6G communication network.

In Example 16d, the subject matter of any one of Examples 2d to 15d can optionally further be configured to determine a quality of a first wireless communication link between another communication device and a radio network; and to provide a second wireless communication link between the other communication device and the communication device when the determined quality of the first wireless communication link falls below a predetermined threshold value; and to establish a third wireless communication link between the communication device and the radio network or another radio network, to thereby establish a communication connection between the other communication device and the radio network or the other radio network; the communication connection including the second wireless communication link and the third wireless communication link.

In Example 17d, the subject matter of any one of Examples 2d to 16d can optionally further include that the first radio network is a WiFi radio and the second radio is a cellular wireless wide area network (WWAN). The cellular WWAN may be a 3GPP network, e.g. a 4G, 5G or 6G network.

In Example 18d, the subject matter of any one of Examples 2d to 17d can optionally include that the mobile communication device is a laptop computer or a smart phone.

While the invention has been particularly shown and described with reference to specific embodiments, it should be understood by those skilled in the art that various changes in form and detail may be made therein without departing from the spirit and scope of the invention as defined by the appended claims. The scope of the invention is thus indicated by the appended claims and all changes which come within the meaning and range of equivalency of the claims are therefore intended to be embraced.

**Claims**

1.  A mobile communication device, comprising:

    a first radio configured to process a first signal in a first frequency band, and
    a second radio configured to process a second signal in a second frequency band,
    wherein the first frequency band and the second frequency band are overlapping at least in part; and
    an antenna-plexer circuit, coupled to the first radio and the second radio, and
    comprising at least one shared antenna to send the first signal and the second signal, and the antenna-plexer circuit further comprising a combining circuit coupling the first radio and the second radio with the shared antenna, wherein the combining circuit comprises at least one bulk acoustic wave filter configured as a band rejection filter having an attenuation slope having an amount of at least about 0.15 dB/MHz at the cut-off frequency.

2.  The mobile communication device of claim 1, wherein the first radio is a WiFi radio and the second radio is a 5G radio.

3.  The mobile communication device of claim 1 or 2, wherein the first frequency band and the second frequency band comprises one or more frequency bands in a range from about 2.4 GHz to about 7 GHz, respectively.

4.  The mobile communication device of any one of claims 1 to 3, wherein the combining circuit comprises a quadplexer, the quadplexer comprising an antenna port coupled to the shared antenna, a first radio port coupled to the first radio and a second radio port coupled to the second radio.

5. The mobile communication device of any one of claims 1 to 4, wherein the combining circuit comprises a first diplexer coupling the first shared antenna to the first radio and the second radio, and a second diplexer coupling the second shared antenna to the first radio and the second radio.

6. The mobile communication device of claim5, wherein each of the first diplexer and the second diplexer comprises at least one bulk acoustic wave filter configured as a band rejection filter having an attenuation slope having an amount of at least about 0.15 dB/MHz at the cut-off frequency..

7. The mobile communication device of any one of claims 5 or 6, wherein the first diplexer comprises a band pass filter and a band stop filter, wherein the band stop filter is configured to pass signals having frequency except a predetermined frequency band and the band pass filter is configured to pass signals having the predetermined frequency band.

8. The mobile communication device of any one of claims 1 to 7, further comprising a coexistence management circuit, and wherein the combining circuit comprises a radio frequency switch coupled to each of the at least one antenna, the first radio, the second radio and the coexistence management circuit, wherein the coexistence management circuit is configured to control the radio frequency switch depending on the frequencies of the first signal and the second signal.

9. The mobile communication device of claim 8, comprising a first band rejection filter coupling the first radio with the radio frequency switch, and a second band rejection filter coupling the second radio with the radio frequency switch.

10. The mobile communication device of any one of claims 8 or 9, wherein the radio frequency switch is configured to:

    couple the first radio to the at least one shared antenna;
    couple the second radio to the at least one shared antenna;
    couple each of the first radio and the second radio to the at least one shared antenna; and
    couple none of the first radio and the second radio to the at least one shared antenna.

11. The mobile communication device of any one of claims 1 to 10, further comprising a processor configured to: generate a hash key; send the hash key using a class 2 message in a cellular wireless wide area network (WWAN) to a terminal communication device; receive an acknowledge message from the terminal communication device; and, after having received the acknowledge message, provide an access for the communication device to a physical memory of the terminal communication device.

12. The mobile communication device of any one of claims 1 to 10, further comprising a processor configured to: receive, in a reduced power mode, a class 2 message in a 3GPP wireless wide area network from a terminal communication device, the class 2 message comprising a hash key, and the reduced power mode comprises a first number of active antennas of the communication device; verify the hash key; activate, after having verified the hash key, an active mode of the communication device, the active mode comprising a second number of active antennas of the communication device, wherein the second number is larger than the first number; send an acknowledge message to the terminal communication device to allow a provide an access for the terminal communication device to a physical memory of the communication device.

13. The mobile communication device of any one of claims 1 to 12, further configured: to determine a quality of a first wireless communication link between another communication device and a radio network; and to provide a second wireless communication link between the other communication device and the communication device when the determined quality of the first wireless communication link falls below a predetermined threshold value; and to establish a third wireless communication link between the communication device and the radio network or another radio network, to thereby establish a communication connection between the other communication device and the radio network or the other radio network; the communication connection comprising the second wireless communication link and the third wireless communication link.

14. The mobile communication device of any one of claims 1 to 13, wherein the first radio is configured for a WiFi network and the second radio is configured for a cellular wireless wide area network.

15. The mobile communication device of any one of claims 1 to 14, configured as a laptop computer or a smart phone.

FIG.1A

150

102

100

304

108

112

110

114

106

FIG.1B

160

102

1. network

100

1. link

108p

128

2. link

104

112

108s

130

5. link

118

120

132

114

126

122

3. link

4. link

2. network

EP 4 369 611 A1

FIG.1C

170

FIG.2

EP 4 369 611 A1

FIG.3A

300

112

ANT-Main
312

Wi-Fi Modem

110

ANT-MIMO-3
314

5G Modem

ANT-Main
316

ANT-Div
318

306

Shared Aux
wideband ANT
1.7-7 GHz

Quadplexer 302

| Wi-Fi 2.4 GHz |
| Wi-Fi 5-7 GHz |
| 5G 1.7-2.7 GHz |
| 5G 3.3-5 GHz |

Threshold -20 dB out
of band Rejection

Antenna-plexer 304

EP 4 369 611 A1

## FIG.3B

350

112

ANT-Main 312 → Wi-Fi Modem

110

ANT-MIMO-3 314 → 5G Modem

ANT-Main 316

ANT-Div 318

Diplexer 302-1

Wi-Fi 2.4 GHz

5G 1.7-2.7 GHz

306-1 — Shared Aux ANT 1.7-2.7 GHz

306-2 — Shared Aux ANT 3.3-7.125 GHz

302-2

Diplexer

Wi-Fi 5-7 GHz

5G 3.3-5 GHz

Antenna-plexer 304

Threshold -20 dB out of band Rejection

## FIG.3C

302-1

320

1.7-2.7 GHz Wideband Input 324

2.4 BSF → Except 2.4 GHz, wideband output 326

2.4 BPF → Only 2.4 output, 328

322    Diplexer

EP 4 369 611 A1

FIG.3D

360

ANT-Main
312

112

Wi-Fi Modem

334

Band Rejection
Filter (5G)

306

Shared Aux
wideband ANT

UART

RF4    RF2    NC
RF1

340

Coex Manager @
OS

SOC    GPIO1    RF Switch

330

UART

110

332

GPIO2

336

5G Modem

RF3    RF4

ANT-Main
316

Band Rejection
Filter (Wi-Fi)

| States | Conditions |
|---|---|
| 00 ( RF1) | OFF |
| 01 (RF2) | Wi-Fi -ON |
| 10 (RF3) | 5G -ON |
| 11 (RF4) | Wi-Fi & 5G -ON |

ANT-Div
318

334

Antenna-plexer with RF Switch 304

ANT-MIMO-3
314

EP 4 369 611 A1

34

FIG.4A

400

Mobile monitors PC SSID's
signal quality
(EWMA + Hysteresis)
402

416

PC hotspot request
prediction algorithm
404

Reduce mobile
Scanning frequency
414

NO

Low PC SSID
signal
quality?
406

Received hotspot
request from PC
within timeout ?
410

NO

YES

NO

YES

Increase mobile
scanning frequency
408

Mobile hotspot
activated
412

EP 4 369 611 A1

EP 4 369 611 A1

## FIG.4B

100

104

420

422 First PC hotspot request BLE advertisement is unencrypted

424 User prompt only for first request

426

428 Mobile Hotspot SSID and PC connect with WPA shared key

430

Subsequent BLE PC requests are encrypted with Wi-Fi WPA shared key resulting in seamless and secure transition without user intervention

FIG.5A

EP 4 369 611 A1

FIG.5B

FIG.5B

550

100   124, 126   104

Primary Device   Secondary Device

520

Hibernate or Shutdown Procedure is started

522

WWAN downgrade procedure

524

Only Main Antenna enabled   526   UE capability is reduced

510

Class-2 SMS to Secondary device   502

Sleep or Conn Standby   Class-2 SMS to Secondary device   504

Hibernate or Shutdown Procedure is Completed

510

App Login procedure and virtual drive activation   EC\BMC wake logic is started to wake the PC (without screen been on)   530

500   534

WWAN upgrades antenna and UE capabilities   WWAN starts registration procedure   532

38

EP 4 369 611 A1

FIG.6A

600

┌─────────────────────────────────────────┐
│                                         │  610
│        first communication means        │
│                                         │
└─────────────────────────────────────────┘

┌─────────────────────────────────────────┐
│                                         │  614
│       shared antenna-plexer means       │
│                                         │
└─────────────────────────────────────────┘

┌─────────────────────────────────────────┐
│                                         │  612
│      secondcommunication means          │
│                                         │
└─────────────────────────────────────────┘

FIG.6B

620

first communication means
622

second communication means
624

first network
626

second network
628

EP 4 369 611 A1

FIG.6C

640

generating a hash key — 642

transmitting the hash key using a class 2 message in a cellular wide area network — 644

verifying the hash key — 646

acknowledging the verified hashed key — 648

upgrading the number of active antennas — 650

provide access to a memory — 652

Europäisches
Patentamt

European
Patent Office

Office européen
des brevets

# EUROPEAN SEARCH REPORT

Application Number

EP 22 20 6081

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/226475 A1 (QUALCOMM INC [US]) 27 October 2022 (2022-10-27) * abstract; figures 4,5, * * paragraphs [0065] – [0075] * ----- | 1–15 | INV. H04B1/04 |
| X | US 2018/331714 A1 (SEE ANDREW PUAYHOE [US] ET AL) 15 November 2018 (2018-11-15) * paragraphs [0038] – [0046], [0054]; figures 3, 4A, 4B, 5A * ----- | 1–15 | |
| X | US 2019/305831 A1 (FREISLEBEN STEFAN [DE] ET AL) 3 October 2019 (2019-10-03) * paragraphs [0105] – [0124]; figures 1–12 * ----- | 1–15 | |

TECHNICAL FIELDS
SEARCHED (IPC)

H04B

The present search report has been drawn up for all claims

| Place of search | Date of completion of the search | Examiner |
|---|---|---|
| Munich | 20 April 2023 | Almenar Muñoz, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 6081

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2023

| Patent document cited in search report | | Publication date | Patent family member(s) | | Publication date |
|---|---|---|---|---|---|
| WO 2022226475 | A1 | 27-10-2022 | NONE | | |
| US 2018331714 | A1 | 15-11-2018 | US 2018331714 A1 | | 15-11-2018 |
| | | | WO 2018209303 A1 | | 15-11-2018 |
| US 2019305831 | A1 | 03-10-2019 | US 2019305831 A1 | | 03-10-2019 |
| | | | US 2022385337 A1 | | 01-12-2022 |
| | | | WO 2019191625 A1 | | 03-10-2019 |

EPO FORM P0459

For more details about this annex : see Official Journal of the European Patent Office, No. 12/82